(19) Europäisches Patentamt / European Patent Office / Office européen des brevets

(11) **EP 4 607 412 A1**

(12) **EUROPEAN PATENT APPLICATION**

(43) Date of publication:
27.08.2025 Bulletin 2025/35

(21) Application number: 25154938.2

(22) Date of filing: 30.01.2025

(51) International Patent Classification (IPC):
$G06N\ 10/20$ (2022.01)   $G06N\ 10/60$ (2022.01)

(52) Cooperative Patent Classification (CPC):
G06N 10/20; G06N 10/60

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 26.02.2024 JP 2024026273

(71) Applicant: Fujitsu Limited
Kawasaki-shi, Kanagawa 211-8588 (JP)

(72) Inventors:
• CHINZEI, Koki
Kawasaki-shi, Kanagawa, 211-8588 (JP)
• YAMANO, Shinichiro
Bunkyo-ku, Tokyo, 113-8654 (JP)

(74) Representative: Hoffmann Eitle
Patent- und Rechtsanwälte PartmbB
Arabellastraße 30
81925 München (DE)

(54) **INFORMATION PROCESSING PROGRAM, INFORMATION PROCESSING METHOD, AND INFORMATION PROCESSING DEVICE**

(57) An information processing program for causing a computer to execute processing includes acquiring a first Pauli operator set that is a set of first Pauli operators for qubits related to a target problem formed by a product of Pauli operators for qubits different from each other among a plurality of Pauli operators that is mutually commutative and independent for the qubits related to the problem, acquiring a second Pauli operator set that is a set of second Pauli operators for the qubits related to the problem, which are mutually commutative or anticommutative and are commutative with all the first Pauli operators of the first Pauli operator set, and determining a commuting block circuit formed by a plurality of blocks that corresponds to a specified number such that each rotation gate of a plurality of rotation gates included in each block of the plurality of blocks has a generator ($G\_j^b$) formed by a product of any one first Pauli operator different for each of the rotation gates in the acquired first Pauli operator set and any one second Pauli operator selected for each of the blocks in the acquired second Pauli operator set.

FIG. 1

EP 4 607 412 A1

## Description

FIELD

The embodiment discussed herein is related to an information processing program, an information processing method, and an information processing device.

BACKGROUND

Since before, there is a variational quantum algorithm for solving a target problem by optimizing a parameter of a prescribed quantum circuit representing a cost function using a variational method. The optimization is implemented by, for example, a gradient method of measuring a gradient of the cost function and updating the parameter. Here, it is desirable to facilitate measurement of the gradient of the cost function and to reduce a processing cost at the time of the optimization of the parameter by adopting a commuting block circuit for the prescribed quantum circuit.

As prior art, for example, there is a technology of determining, for each of a plurality of electron excitations, whether or not to implement a corresponding circuit based on whether or not an initial value of a corresponding variable is equal to or greater than a predetermined threshold. Furthermore, for example, there is a technology of changing a first rotation angle applied to a rotation operation in a first quantum circuit for generating a wave function according to a second rotation angle applied to a partial circuit that indicates a rotation operation in a second quantum circuit for transforming a base of the wave function. Furthermore, for example, there is a technology of generating a quantum circuit from a unitary coupled cluster ansatz. Furthermore, for example, there is a technology of implementing a unitary quantum gate on one or more qubits.

Citation List

Patent Documents

International Publication Pamphlet No. WO 2023/175703
International Publication Pamphlet No. WO 2023/148806
U.S. Patent Application Publication No. 2023/0237361
U.S. Patent Application Publication No. 2020/0364602

SUMMARY OF INVENRION

TECHNICAL PROBLEM

However, there is a problem in the prior art that it is difficult to implement a commuting block circuit for facilitating measurement of a gradient of a cost function.

In one aspect, an object of an embodiment is to enable implementation of a commuting block circuit.

SOLUTION TO PROBLEM

According to an aspect of the embodiments, an information processing program for causing a computer to execute processing includes acquiring a first Pauli operator set that is a set of first Pauli operators for qubits related to a target problem formed by a product of Pauli operators for qubits different from each other among a plurality of Pauli operators that is mutually commutative and independent for the qubits related to the problem, acquiring a second Pauli operator set that is a set of second Pauli operators for the qubits related to the problem, which are mutually commutative or anticommutative and are commutative with all the first Pauli operators of the first Pauli operator set, and determining a commuting block circuit formed by a plurality of blocks that corresponds to a specified number such that each rotation gate of a plurality of rotation gates included in each block of the plurality of blocks has a generator ($G\_j^b$) formed by a product of any one first Pauli operator different for each of the rotation gates in the acquired first Pauli operator set and any one second Pauli operator selected for each of the blocks in the acquired second Pauli operator set.

ADVANTAGEOUS EFFECTS OF INVENTION

According to one aspect, it is possible to enable implementation of a commuting block circuit.

BRIEF DESCRIPTION OF DRAWINGS

FIG. 1 is an explanatory diagram illustrating one example of an information processing method according to an embodiment;
FIG. 2 is an explanatory diagram illustrating an example of an information processing system 200;
FIG. 3 is a block diagram illustrating a hardware configuration example of an information processing device 100;
FIG. 4 is a block diagram illustrating a hardware configuration example of a calculation device 201;
FIG. 5 is a block diagram illustrating a functional configuration example of the information processing device 100;
FIG. 6 is an explanatory diagram illustrating an example of determining a commuting block circuit;
FIG. 7 is an explanatory diagram (part 1) illustrating a specific example of determining the commuting block circuit;
FIG. 8 is an explanatory diagram (part 2) illustrating the specific example of determining the commuting block circuit;

FIG. 9 is an explanatory diagram (part 3) illustrating the specific example of determining the commuting block circuit;

FIG. 10 is an explanatory diagram (part 1) illustrating a specific example of determining a base transformation circuit;

FIG. 11 is an explanatory diagram (part 2) illustrating the specific example of determining the base transformation circuit;

FIG. 12 is an explanatory diagram (part 3) illustrating the specific example of determining the base transformation circuit;

FIG. 13 is an explanatory diagram (part 4) illustrating the specific example of determining the base transformation circuit;

FIG. 14 is a flowchart illustrating an example of an overall processing procedure; and

FIG. 15 is a flowchart illustrating an example of a design processing procedure.

## DESCRIPTION OF EMBODIMENTS

Hereinafter, an embodiment of an information processing program, an information processing method, and an information processing device will be described in detail with reference to the drawings.

(One Example of Information Processing Method According to Embodiment)

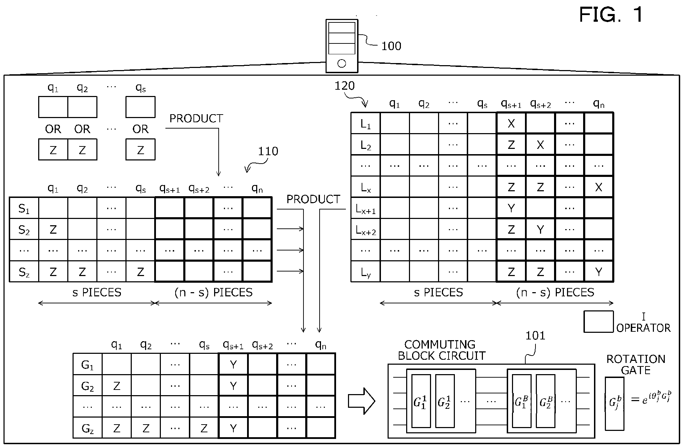

FIG. 1 is an explanatory diagram illustrating one example of the information processing method according to the embodiment. An information processing device 100 is a computer for determining a specific content of a commuting block circuit. The information processing device 100 is, for example, a server, a personal computer (PC), or the like. The commuting block circuit is a quantum circuit.

Since before, there is a quantum computer that executes a quantum circuit. The quantum computer is a computer using a principle of quantum mechanics, and is expected to solve a specific problem at high speed by using a quantum superposition state. The specific problem is, for example, prime factorization, a search problem, quantum dynamics calculation, or the like. The quantum computer is expected to be applied to, for example, fields such as drug discovery, material development, or finance.

Here, there is a variational quantum algorithm as one of algorithms for solving the specific problem based on a quantum circuit. Specifically, it is conceivable that a quantum computer and a classical computer cooperate with each other, and solve a target problem by optimizing a parameter of a prescribed quantum circuit representing a cost function using a variational method. The parameter is, for example, a setting value related to a quantum gate of the quantum circuit.

The optimization is implemented by, for example, a gradient method of repeating a series of processing of measuring a gradient of the cost function and updating the parameter. The measurement is executed by, for example, the quantum computer. The update is executed by, for example, the classical computer. The variational quantum algorithm is applied to, for example, quantum chemical calculation, material calculation, quantum machine learning, quantum combinatorial optimization, or the like.

Here, since a processing cost for the measurement is proportional to the number of parameters, as a scale of the problem increases and the number of parameters increases, it tends to be more difficult to solve the problem by the variational quantum algorithm. Specifically, as the scale of the problem increases and the number of parameters increases, a processing load, a processing time, memory usage, and the like at the time of optimization of the parameters tend to increase, and the problem may not be solved within a practical time.

Thus, it is desirable to facilitate the measurement of the gradient of the cost function and to reduce the processing cost at the time of the optimization of the parameter by adopting a quantum circuit referred to as a commuting block circuit for the prescribed quantum circuit representing the cost function. The commuting block circuit includes a plurality of blocks. The block includes a quantum gate. The quantum gate is, for example, a rotation gate representing a rotation operation on a qubit with reference to an X axis, a Y axis, a Z axis, or the like. The block specifically includes a rotation gate having a generator that is a Pauli operator. The parameter specifically corresponds to a rotation angle of the rotation gate.

The commuting block circuit is specifically a quantum circuit that satisfies a specific condition. The commuting block circuit specifically has a first condition that generators of different rotation gates included in the same block are all mutually commutative. The commuting block circuit specifically has a second condition that a generator of a rotation gate included in one block and a generator of a rotation gate included in the other block are all commutative or all anticommutative in any set of different blocks.

According to the commuting block circuit, it is conceivable that the measurement of the gradient of the cost function may be facilitated. In the commuting block circuit, when a differential for a parameter of the rotation gate is measured in order to measure the gradient of the cost function, a base transformation operation is performed on each qubit, and it is desirable to prepare a base transformation circuit.

For example, according to the commuting block circuit, it is conceivable that it is possible to enable, in a last block, measurement of the differential for the parameter of the rotation gate by one type of quantum circuit including the base transformation circuit. For example, according to the commuting block circuit, it is conceivable that it is possible to enable, in a block other than the last block, measurement of the differential for the parameter of the rotation gate by two types of quantum circuits each including the base transformation circuit.

Therefore, according to the commuting block circuit, when one or two types of quantum circuits including the base transformation circuit are prepared for each block, it is possible to facilitate the measurement of the differential for the parameter of the rotation gate and to facilitate the measurement of the gradient of the cost function. Regarding the commuting block circuit, specifically, Reference Document 1 below may be referred to.

Reference Document 1:Bowles, Joseph, David Wierichs, and Chae-Yeun Park. "Backpropagation scaling in parameterized quantum circuits." arXiv preprint arXiv:2306.14962 (2023).

However, since before, there is a problem that it is difficult to implement the commuting block circuit for facilitating the measurement of the gradient of the cost function. Specifically, it is not possible to determine what type of quantum gate each block needs to include so as to satisfy the first condition and the second condition, and it is not possible to determine the commuting block circuit.

Therefore, in the present embodiment, an information processing method that enables implementation of a commuting block circuit will be described.

In the following description, for convenience, a character a to which a subscript b is attached may be referred to as "a_b". Furthermore, a character a to which a superscript c is attached may be referred to as "°a^c". Furthermore, a character a to which the subscript b and the superscript c are attached may be referred to as "a_b^c".

In FIG. 1, the information processing device 100 determines a specific content of a commuting block circuit 101 to enable implementation of the commuting block circuit 101. As illustrated in FIG. 1, the commuting block circuit 101 includes B blocks. The block includes a plurality of quantum gates. A j-th quantum gate included in a b-th block specifically has a generator $G\_j^b$ that is a Pauli operator. The j-th quantum gate included in the b-th block specifically represents a rotation operation indicated by $e^{(i\theta\_j^b G\_j^b)}$ on a qubit.

Hereinafter, how the information processing device 100 determines the generator $G\_j^b$ included in a rotation gate included in each block, and how the information processing device 100 determines the specific content of the commuting block circuit 101 will be specifically described with reference to FIG. 1.

In FIG. 1, the information processing device 100 stores information related to a target problem. The information processing device 100 stores, for example, the total number n of qubits related to the target problem. The information processing device 100 stores, for example, indices for identifying the qubits related to the target problem. In the example of FIG. 1, the indices are specifically q_1, q_2, ..., q_n.

The information processing device 100 receives specification of the number B of blocks forming the commuting block circuit 101. The information processing device 100 receives the specification of the number B of blocks forming the commuting block circuit 101 based on, for example, an operation input of a user.

(1-1) The information processing device 100 acquires a first Pauli operator set 110 that is a set of first Pauli operators for the qubits related to the target problem. The first Pauli operator is specifically formed by a product of Pauli operators for qubits different from each other among a plurality of Pauli operators that is mutually commutative and independent for the qubits related to the target problem.

The information processing device 100 receives, for example, specification of the number s of qubits (s < n). The information processing device 100 divides the n qubits into the first s qubits and remaining (n - s) qubits. The information processing device 100 specifies, for example, 2^s Pauli operators that are mutually commutative and independent for each qubit of the s qubits. Here, the Pauli operator represents, for example, causing an I operator or a Z operator to act on one qubit. The I operator is an identity operator. In the example of FIG. 1, one of the Pauli operators specifically represents that the I operator is caused to act on the qubit q_1. Furthermore, one of the Pauli operators specifically represents that the Z operator is caused to act on the qubit q_1.

The information processing device 100 specifies, for example, the first Pauli operator for the s qubits formed by a product of s Pauli operators for qubits different from each other among the 2^s Pauli operators. The first Pauli operator represents a combination of the I operators or the Z operators caused to act on each qubit. In the example of FIG. 1, there are z first Pauli operators. z is 2^s. Furthermore, S_1 that is one of the first Pauli operators is specifically "II ... III ... I" that causes the I operator to act on all the qubits q_1, q_2, ..., q_s. Furthermore, S_z that is one of the first Pauli operator is specifically "ZZ ... ZII ... I" that causes the Z operator to act on all the qubits q_1, q_2, ..., q_s. The information processing device 100 acquires, for example, the first Pauli operator set 110 that is the set of the specified first Pauli operators.

(1-2) The information processing device 100 acquires a second Pauli operator set 120 that is a set of second Pauli operators that are mutually commutative or anticommutative for the qubits related to the target problem. The second Pauli operators are commutative with all the first Pauli operators of the first Pauli operator set 110.

For example, the information processing device 100 causes, for each qubit of the (n - s) qubits, an X operator or a Y operator to act on the qubit, and specifies the second Pauli operator that causes the Z operator to act on another qubit of which order is earlier than that of the qubit. In the example of FIG. 1, L_1 that is one of the second Pauli operators is specifically "II ... IXI ... I" that causes the X operator to act on the qubit q_s+1 and causes the I operator to act on all the qubits q_s+2, ..., q_n. Furthermore, L_x+1 that is one of the second Pauli operators is specifically "II ... IYI ... I" that causes the Y operator to act on the qubit q_s+1 and causes the I operator to act on all the qubits q_s+2, ..., q_n. The information processing device 100 acquires, for example, the second Pauli operator set 120 that is the set of the specified second Pauli operators.

(1-3) The information processing device 100 determines a generator corresponding to each rotation gate of a plurality of rotation gates included in each block of the B blocks based on the acquired first Pauli operator set 110 and the acquired second Pauli operator set 120. The generator represents a content of an operation on a qubit.

In each block, the information processing device 100 selects, for example, the different first Pauli operator for each rotation gate from the first Pauli operator set 110. The information processing device 100 selects, for example, the different second Pauli operator for each block from the second Pauli operator set 120. The information processing device 100 may select, for example, the same second Pauli operator for different blocks. For example, the information processing device 100 determines, for each rotation gate included in each block, a generator formed by a product of any one selected first Pauli operator and any one selected second Pauli operator.

Specifically, the information processing device 100 selects, for a j-th rotation gate included in the b-th block, a j-th first Pauli operator in the first Pauli operator set 110. Specifically, the information processing device 100 selects, for the b-th block, a b-th second Pauli operator from the head in the second Pauli operator set 120. The information processing device 100 determines, for the j-th rotation gate included in the b-th block, the generator $G_j^b$ formed by a product of the selected b-th second Pauli operator and the selected j-th first Pauli operator. Hereinafter, a subscript b for the generator may be omitted for simplification.

In the example of FIG. 1, the information processing device 100 specifically determines, for the (j = 1)-th rotation gate included in the (b = x + 1)-th block, a generator G_1 formed by a product of the first first Pauli operator S_1 and the (x + 1)-th second Pauli operator L_x+1. The generator G_1 is "II ... IYI ... I" that causes the I operator to act on all the qubits q_1, q_2, ..., q_s, causes the Y operator to act on the qubit q_s+1, and causes the I operator to act on all the qubits q_s+2, ..., q_n.

Furthermore, the information processing device 100 specifically determines a generator G_z formed by a product of a z-th first Pauli operator S_z and the (x + 1)-th second Pauli operator L_x+1, for a (j = z)-th rotation gate included in the (b = x + 1)-th block. The generator G_z is "ZZ...ZYI ... I" that causes the Z operator to act on all the qubits q_1, q_2, ..., q_s, causes the Y operator to act on the qubit q_s+1, and causes the I operator to act on all the qubits q_s+2, ..., q_n. Furthermore, specifically, the information processing device 100 similarly determines a generator for each rotation gate included in a block in another order.

The information processing device 100 determines the commuting block circuit 101 formed by the B blocks such that each rotation gate included in each block has the determined generator. As a result, the information processing device 100 may appropriately determine the generator included in the rotation gate included in each block so as to satisfy the first condition and the second condition described above, and may appropriately determine the specific content of the commuting block circuit 101.

Thus, the information processing device 100 may enable the implementation of the commuting block circuit 101, and may facilitate measurement of a gradient of a cost function. The information processing device 100 may reduce a processing cost at the time of optimization of a parameter, and may facilitate solving of a problem within a practical time. The processing cost is a processing load, a processing time, memory usage, or the like.

Furthermore, as described above, it is desirable to implement a base transformation circuit at the time of measurement of a differential for a parameter of each rotation gate included in any one block forming the commuting block circuit 101. However, since before, there is a problem that it is difficult to implement the base transformation circuit. Specifically, it is not possible to determine what type of quantum gate the base transformation circuit needs to include for each block according to a specific content of each block forming the commuting block circuit 101, and it is not possible to determine the base transformation circuit.

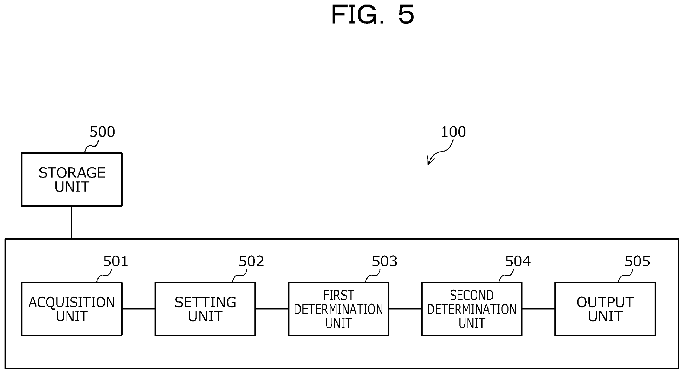

Therefore, it is preferable that the information processing device 100 determines the base transformation circuit for each block forming the determined commuting block circuit 101 together with the commuting block circuit 101. A specific example in which the information processing device 100 determines the base transformation circuit for each block forming the determined commuting block circuit 101 will be described later with reference to FIGs. 5 to 13.

Here, a case has been described where a function as the information processing device 100 is implemented by a single computer. However, the present embodiment is not limited to this. For example, the function as the information processing device 100 may be implemented by cooperation of a plurality of computers. For example, the function as the information processing device 100 may be implemented in a cloud.

(Example of Information Processing System 200)

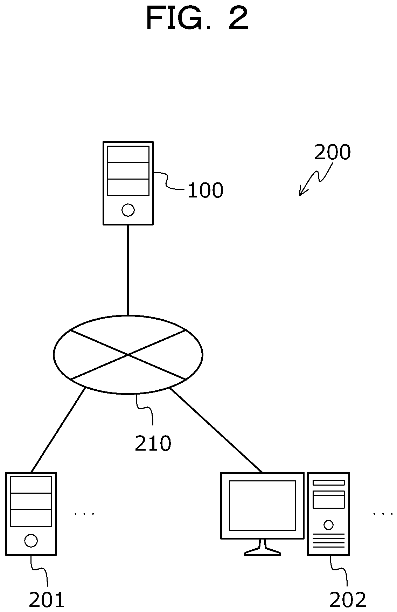

Next, an example of an information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100, a calculation device 201, and a client device 202.

In the information processing system 200, the information processing device 100 and the calculation device 201 are coupled via a wired or wireless network 210. The network 210 is, for example, a local area network (LAN), a wide area network (WAN), the Internet, or the like. Furthermore, in the information processing system 200, the information processing device 100 and the client device 202 are coupled via the wired or wireless network 210.

The information processing device 100 is a computer for determining a commuting block circuit. The information processing device 100 may further be a computer for determining a base transformation circuit for a block forming the commuting block circuit.

The information processing device 100 acquires, for example, a processing request for requesting to solve a target problem. The processing request includes, for example, information related to the target problem. The information processing device 100 specifically acquires the processing request by receiving the processing request from another computer. The another computer is, for example, the client device 202 or the like. The information processing device 100 may specifically acquire the processing request by receiving an input of the processing request based on an operation input of a user.

In response to the processing request, the information processing device 100 determines a commuting block circuit to be used for solving the target problem. A specific example in which the information processing device 100 determines the commuting block circuit will be described later with reference to FIGs. 5 to 13. Furthermore, the information processing device 100 further determines a base transformation circuit for a block forming the determined commuting block circuit. A specific example in which the information processing device 100 determines the base transformation circuit will be described later with reference to FIGs. 5 to 13.

The information processing device 100 transmits the determined commuting block circuit and the determined base transformation circuit to the calculation device 201. The information processing device 100 solves the target problem in accordance with the variational quantum algorithm in cooperation with the calculation device 201. The information processing device 100 outputs a result of solving the target problem. For example, the information processing device 100 transmits the result of solving the target problem to another computer. The another computer is, for example, the client device 202 or the like. For example, the information processing device 100 may output the result of solving the target problem, so that a user may refer to the result. As a result, the information processing device 100 may make the result of solving the target problem be available outside. The information processing device 100 is, for example, a server, a PC, or the like.

The calculation device 201 is a computer for executing quantum calculation. The calculation device 201 receives a commuting block circuit and a base transformation circuit from the information processing device 100. The calculation device 201 implements the received commuting block circuit and base transformation circuit. In cooperation with the information processing device 100, the calculation device 201 solves a target problem by using the implemented commuting block circuit and base transformation circuit in accordance with the variational quantum algorithm. For example, a case is conceivable where the calculation device 201 is a classical computer that activates a quantum simulator. In this case, the calculation device 201 is, for example, a server, a PC, or the like. Furthermore, for example, a case is conceivable where the calculation device 201 is an actual machine of a quantum computer.

The client device 202 is a computer used by a user who desires to solve a target problem. The client device 202 generates a processing request for requesting to solve the target problem based on an operation input of the user, and transmits the processing request to the information processing device 100. The client device 202 receives a result of solving the target problem from the information processing device 100. The client device 202 outputs the result of solving the target problem, so that the user may refer to the result. The client device 202 is, for example, a PC, a tablet terminal, a smartphone, or the like.

Here, a case has been described where the information processing device 100 and the calculation device 201 are different devices. However, the present embodiment is not limited to this. For example, the information processing device 100 may have a function as the calculation device 201, and may also operate as the calculation device 201. Furthermore, a case has been described where the information processing device 100 and the client device 202 are different devices. However, the present embodiment is not limited to this. For example, the information processing device 100 may have a function as the client device 202, and may also operate as the client device 202.

(Hardware Configuration Example of Information Processing Device 100)

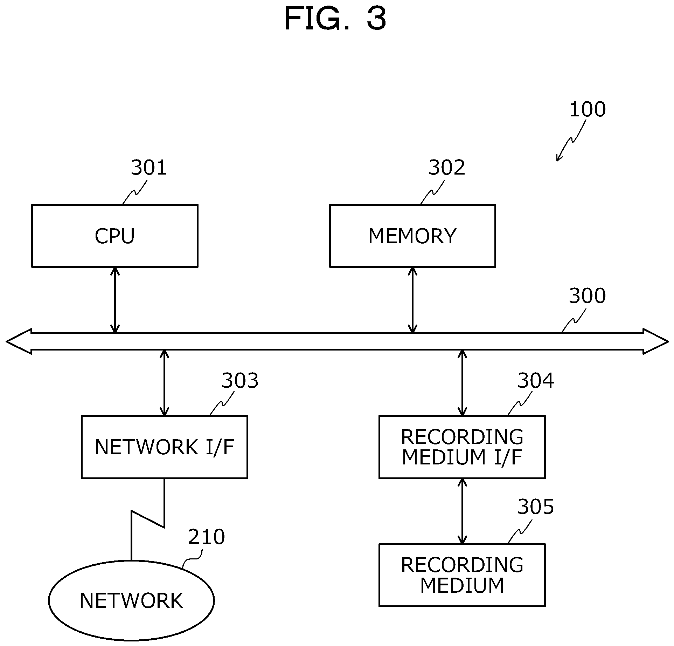

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network Interface (I/F) 303, a recording medium I/F 304, and a recording medium 305. Furthermore, the respective components are coupled to each other by a bus 300.

Here, the CPU 301 performs overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line, and is coupled to another computer via the network 210. Additionally, the network I/F 303 takes control of an interface between the network 210 and the inside, and controls input and output of data to and from the another computer. The network I/F 303 is, for example, a modem, a LAN adapter, or the like.

The recording medium I/F 304 controls reading and writing of data to and from the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, a speaker, or the like in addition to the components described above. Furthermore, the information processing device 100 may include a plurality of the recording medium I/Fs 304 and a plurality of the recording media 305. Furthermore, the information processing device 100 does not have to include the recording medium I/F 304 and the recording medium 305.

(Hardware Configuration Example of Calculation Device 201)

Since a hardware configuration example of the calculation device 201 in a case where the calculation device 201 is a classical computer that activates a quantum simulator is specifically similar to the hardware configuration example of the information processing device 100 illustrated in FIG. 3, description thereof will be omitted.

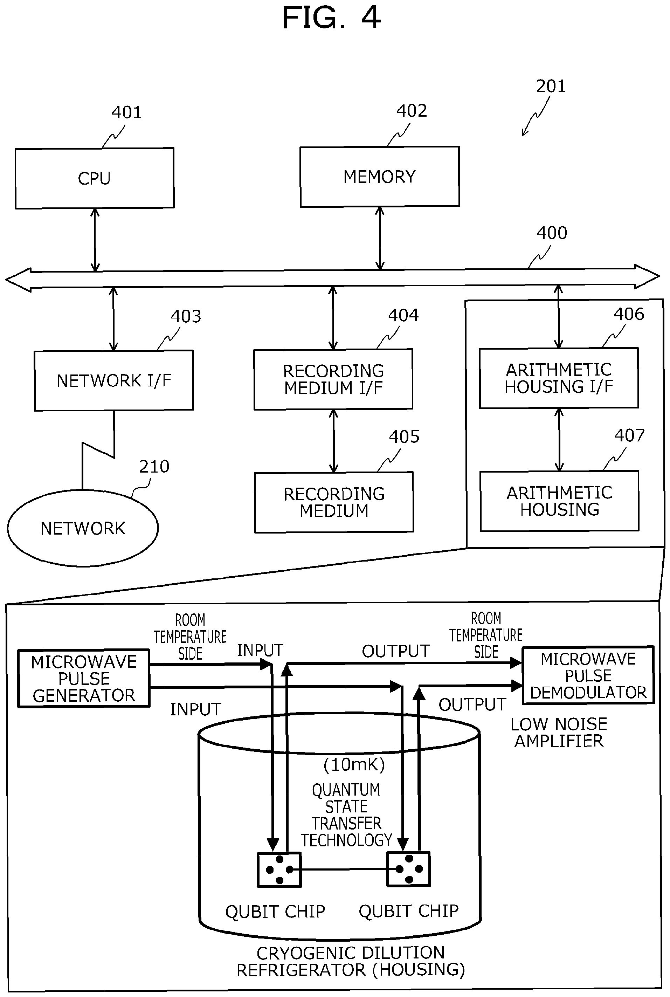

On the other hand, a case is conceivable where the calculation device 201 is an actual machine of a quantum computer. Here, a hardware configuration example of the calculation device 201 in a case where the calculation device 201 is the actual machine of the quantum computer will be described with reference to FIG. 4.

FIG. 4 is a block diagram illustrating the hardware configuration example of the calculation device 201. In FIG. 4, the calculation device 201 includes a CPU 401, a memory 402, a network I/F 403, a recording medium I/F 404, and a recording medium 405. The calculation device 201 further includes an arithmetic housing I/F 406 and an arithmetic housing 407. Furthermore, the respective components are coupled to each other by a bus 400.

Here, the CPU 401 performs overall control of the calculation device 201. The memory 402 includes, for example, a ROM, a RAM, a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 210 through a communication line, and is coupled to another computer via the network 210. Additionally, the network I/F 403 takes control of an interface between the network 210 and the inside, and controls input and output of data to and from the another computer. The network I/F 403 is, for example, a modem, a LAN adapter, or the like.

The recording medium I/F 404 controls reading and writing of data from and to the recording medium 405 under the control of the CPU 401. The recording medium I/F 404 is, for example, a disk drive, an SSD, a USB port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be attachable to and detachable from the calculation device 201.

The arithmetic housing I/F 406 controls access to the arithmetic housing 407 under the control of the CPU 401. The arithmetic housing I/F 406 transforms an output signal from the CPU 401 into an input signal to the arithmetic housing 407 using a microwave pulse generator, and transmits the input signal to the arithmetic housing 407. The arithmetic housing I/F 406 transforms an output signal from the arithmetic housing 407 into an input signal to the CPU 401 using a microwave pulse demodulator, and transmits the input signal to the CPU 401. The arithmetic housing 407 is an operation device in which one or more qubit chips cooled to a cryogenic temperature of 10 mK are mounted. The qubit chip represents, for example, a logical qubit. The arithmetic housing 407 uses one or more qubit chips to perform a predetermined operation in response to an input signal, and outputs an output signal corresponding to a result of performing the predetermined operation.

The calculation device 201 may include, for example, a keyboard, a mouse, a display, a printer, a scanner, a microphone, a speaker, or the like in addition to the components described above. Furthermore, the calculation device 201 may include a plurality of the recording medium I/Fs 404 and a plurality of recording media 405. Furthermore, the calculation device 201 does not have to include the recording medium I/F 404 and the recording medium 405. Furthermore, the qubit chip in the arithmetic housing 407 may be controlled by a method other than microwaves. The qubit chip in the arithmetic housing 407 may implement, for example, an optical qubit.

(Hardware Configuration Example of Client Device 202)

Since a hardware configuration example of the client device 202 is specifically similar to the hardware configuration example of the information processing device 100 illustrated in FIG. 3, description thereof will be omitted.

(Functional Configuration Example of Information Processing Device 100)

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, a setting unit 502, a first determination unit 503, a second determination unit 504, and an output unit 505.

The storage unit 500 is implemented by, for example, a storage area such as the memory 302 or the recording medium 305 illustrated in FIG. 3. Hereinafter, a case will be described where the storage unit 500 is included in the information processing device 100. However, the present embodiment is not limited to this. For example, the storage unit 500 may be included in a device different from the information processing device 100, and storage content of the storage unit 500 may be referred to from the information processing device 100.

The acquisition unit 501 to the output unit 505 function as an example of a control unit. Specifically, for example, the acquisition unit 501 to the output unit 505 implement functions thereof by causing the CPU 301 to execute a program stored in a storage area such as the memory 302 or the recording medium 305 illustrated in FIG. 3, or by the network I/F 303. A processing result of each functional unit is stored in, for example, a storage area such as the memory 302 or the recording medium 305 illustrated in FIG. 3.

The storage unit 500 stores various types of information referred to or updated in processing of each functional unit. The storage unit 500 stores, for example, information related to a target problem. The information related to the target problem includes, for example, the total number n of qubits related to the target problem. The information related to the target problem may include, for example, indices for identifying the qubits related to the target problem, or the like. The information related to the target problem is, for example, acquired by the acquisition unit 501. The information related to the target problem may be, for example, set by a user in advance.

The storage unit 500 stores, for example, the number s of specified qubits (s < n). The number s of specified qubits is, for example, acquired by the acquisition unit 501. The number s of specified qubits may be, for example, set by a user in advance. In the following description, each qubit of s qubits selected from n qubits may be referred to as a "first qubit". Furthermore, each qubit of remaining (n - s) qubits may be referred to as a "second qubit".

The storage unit 500 stores, for example, the number B of specified blocks forming a target commuting block circuit determined by the determination unit. The block includes a rotation gate. The block may include, for example, up to 2^s rotation gates. The rotation gate has a generator. The generator represents a content of an operation on a qubit. The number B of specified blocks is, for example, acquired by the acquisition unit 501. The number B of specified blocks may be, for example, set by a user in advance.

The storage unit 500 may store a plurality of reference Pauli operators. The plurality of reference Pauli operators is mutually commutative and independent. Each reference Pauli operator is for the qubit related to the target problem. Each reference Pauli operator is specifically a Pauli operator that causes the I operator or the Z operator to act on any one first qubit. The plurality of reference Pauli operators is, for example, set by the setting unit 502.

The storage unit 500 stores a first Pauli operator set $M\_S$. The first Pauli operator set $M\_S$ is a set of a plurality of first Pauli operators SJ. In the first Pauli operator set $M\_S$, the plurality of first Pauli operators $S\_j$ is mutually commutative. The first Pauli operators $S\_j$ are for the qubits related to the target problem. The first Pauli operators $S\_j$ are specifically for s first qubits related to the target problem. The first Pauli operator $S\_j$ is formed by a product of reference Pauli operators for first qubits different from each other among the plurality of reference Pauli operators. The first Pauli operator $S,j$ is specifically a Pauli operator that causes the I operator or the Z operator to act on each of the first half s first qubits. The first Pauli operator $S\_j$ corresponds to a stabilizer operator $S\_j$ to be described later with reference to FIGs. 5 to 13. The first Pauli operator set $M\_S$ is, for example, acquired by the acquisition unit 501. The first Pauli operator set $M\_S$ may be, for example, set by the setting unit 502.

The storage unit 500 stores a second Pauli operator set $M\_L$. The second Pauli operator set $M\_L$ is a set of a plurality of second Pauli operators $L\_b$. In the second Pauli operator set $M\_L$, the plurality of second Pauli operators $L\_b$ is mutually commutative or mutually anticommutative. Each second Pauli operator $L\_b$ is commutative with all the first Pauli operators SJ. The second Pauli operators $L\_b$ are for the qubits related to the target problem. The second Pauli operators $L\_b$ are specifically for (n - s) second qubits related to the target problem different from the s first qubits. The second Pauli operator L_b is specifically a Pauli operator that causes the Z operator to act on each of second qubits up to a (j - 1)-th second qubit, and causes the X operator or the Y operator to act on a j-th second qubit, among the second half (n - s) second qubits. The second Pauli operator L_b corresponds to a logical operator L_b to be described later with reference to FIGs. 5 to 13. The second Pauli operator set M_L is, for example, acquired by the acquisition unit 501. The second Pauli operator set M_L may be, for example, set by the setting unit 502.

The acquisition unit 501 acquires various types of information to be used for processing of each functional unit. The acquisition unit 501 stores the acquired various types of information in the storage unit 500, or outputs the acquired various types of information to each functional unit. Furthermore, the acquisition unit 501 may output the various types of information stored in the storage unit 500 to each functional unit. The acquisition unit 501 acquires the various types of information based on, for example, an operation input of a user. The acquisition unit 501 may, for example, receive the various types of information from a device different from the information processing device 100.

The acquisition unit 501 acquires, for example, a processing request. The processing request requests, for example, to determine a commuting block circuit to be used for solving a target problem. The processing request may request, for example, to solve the target problem. The processing request includes, for example, information related to the target problem. The acquisition unit 501 specifically acquires the processing request by receiving an input of the processing request. The acquisition unit 501 may specifically acquire the processing request by receiving the processing request from another computer. The another computer is, for example, the client device 202 or the like. The acquisition unit 501 acquires the information related to the target problem by extracting the information from the processing request.

The acquisition unit 501 acquires, for example, the first Pauli operator set M_S. The acquisition unit 501 specifically acquires the first Pauli operator set M_S by receiving an input of the first Pauli operator set M_S. The acquisition unit 501 may specifically acquire the first Pauli operator set M_S by receiving the first Pauli operator set M_S from another computer. The another computer is, for example, the client device 202 or the like.

The acquisition unit 501 acquires, for example, the second Pauli operator set M_L. The acquisition unit 501 specifically acquires the second Pauli operator set M_L by receiving an input of the second Pauli operator set M_L. The acquisition unit 501 may specifically acquire the second Pauli operator set M_L by receiving the second Pauli operator set M_L from another computer. The another computer is, for example, the client device 202 or the like.

The acquisition unit 501 may receive a start trigger to start processing of any one of the functional units. The start trigger is, for example, a predetermined operation input of a user. The start trigger may be, for example, reception of predetermined information from another computer. The start trigger may be, for example, output of predetermined information by any one of the functional units.

The setting unit 502 acquires the first Pauli operator set M_S by setting the first Pauli operator set M_S based on, for example, the number s of specified qubits. The setting unit 502 specifically sets 2 × s reference Pauli operators that cause the I operator or the Z operator to act on first qubits different from each other in the first half s first qubits. The setting unit 502 specifically selects all sets of s reference Pauli operators for first qubits different from each other among the set 2 × s reference Pauli operators. The setting unit 502 sets 2^s first Pauli operator sets M_S formed by products of the s reference Pauli operators belonging to sets different from each other among all the selected sets. As a result, the setting unit 502 may prepare the first Pauli operator set M_S serving as a guideline for determining a generator included in a rotation gate included in a block forming a commuting block circuit.

The setting unit 502 acquires the second Pauli operator set M_L by, for example, setting the second Pauli operator set M_L. Specifically, when it is assumed that j = 1, 2, ..., (n - s), the setting unit 502 sets the second Pauli operator L_b that causes the Z operator to act on each of the second qubits up to the (j - 1)-th second qubit, and causes the X operator to act on the j-th second qubit. Furthermore, specifically, when it is assumed that j = 1, 2, ..., (n - s), the setting unit 502 sets the second Pauli operator L_b that causes the Z operator to act on each of the second qubits up to the (j - 1)-th second qubit, and causes the Y operator to act on the j-th second qubit. As a result, the setting unit 502 may prepare the second Pauli operator set M_L serving as the guideline for determining the generator included in the rotation gate included in the block forming the commuting block circuit.

The first determination unit 503 determines a commuting block circuit based on the acquired first Pauli operator set M_S and the acquired second Pauli operator set M_L. For example, the first determination unit 503 selects, for the B blocks, any one second Pauli operator L_b in the second Pauli operator set M_L for each block. For example, the first determination unit 503 determines, for each rotation gate included in each block, a generator formed by a product of any one first Pauli operator S_j different for each rotation gate and any one second Pauli operator L_b selected for each block. The first determination unit 503 determines the commuting block circuit such that, for example, each rotation gate included in each block has the determined generator.

Specifically, for each rotation gate included in each block, the first determination unit 503 determines a generator formed by a product of the second Pauli operator L_b in the same order as that of the block and the first Pauli operator S_j in the same order as that of the rotation gate. The first determination unit 503 specifically determines the commuting block circuit such that each rotation gate included in each block has the determined generator.

More specifically, the first determination unit 503 determines the commuting block circuit such that the j-th rotation gate included in the b-th block includes a generator formed by a product of the b-th second Pauli operator L_b and the j-th first Pauli operator S_j. As a result, the first determination unit 503 may appropriately determine the generator included in the rotation gate included in each block so as to satisfy the first condition and the second condition described above, and may appropriately determine the specific content of the commuting block circuit.

The second determination unit 504 determines a base transformation circuit for at least any one of the B blocks. The second determination unit 504 determines, for example, whether or not the number of X operators acting on the s first qubits is an odd number in a case where Clifford inverse transformation is performed on the n qubits for any one block of the B blocks.

Furthermore, the second determination unit 504 specifies, for example, a third qubit and a fourth qubit among the s first qubits in a case where the Clifford inverse transformation is performed on the n qubits for any one block of the B blocks. The third qubit is a qubit on which the X operator or the Y operator acts. The fourth qubit is a qubit on which the I operator or the Z operator acts.

Furthermore, the second determination unit 504 specifies, for example, a fifth qubit and a sixth qubit among the (n - s) second qubits in a case where the Clifford inverse transformation is performed on the n qubits for any one block of the B blocks. The fifth qubit is a qubit on which the X operator acts. The sixth qubit is a qubit on which the Y operator acts.

For example, in a case where it is determined that the number is the odd number, the second determination unit 504 determines a first base transformation circuit. The first base transformation circuit includes a Clifford inverse transformation gate for all the qubits. The first base transformation circuit includes, after the Clifford inverse transformation gate, a set of an Hadamard gate, a phase shift gate, and an Hadamard gate for each third qubit. The first base transformation circuit includes, after the set, a CZ gate for all the third qubits. The first base transformation circuit includes, after the CZ gate, an Hadamard gate for each third qubit. The first base transformation circuit includes, after the Clifford inverse transformation gate, an Hadamard gate for the fifth qubit, and a set of a phase shift gate and an Hadamard gate for the sixth qubit. As a result, the second determination unit 504 may prepare the first base transformation circuit that enables measurement of a differential for a parameter of each rotation gate included in any one block.

For example, in a case where it is determined that the number is an even number, the second determination unit 504 determines a second base transformation circuit. The second base transformation circuit includes a Clifford inverse transformation gate for all the qubits. The second base transformation circuit includes, after the Clifford inverse transformation gate, a first set of an Hadamard gate and a phase shift gate for any one of the third qubits. The second base transformation circuit includes, after the Clifford inverse transformation gate, a second set of an Hadamard gate, a phase shift gate, and an Hadamard gate for each of the remaining third qubits different from the any one of the third qubits. The second base transformation circuit includes, after the first set and the second set, a CZ gate for all the third qubits. The second base transformation circuit includes, after the CZ gate, an Hadamard gate for each third qubit. The second base transformation circuit includes, after the Clifford inverse transformation gate, an Hadamard gate for the fifth qubit, and a set of a phase shift gate and an Hadamard gate for the sixth qubit. As a result, the second determination unit 504 may prepare the second base transformation circuit that enables the measurement of the differential for the parameter of each rotation gate included in any one block.

The output unit 505 outputs a processing result of at least any one of the functional units. Examples of an output format include display on a display, print output to a printer, transmission to an external device by the network I/F 303, or storage in a storage area such as the memory 302 or the recording medium 305. As a result, the output unit 505 may notify a user of the processing result of at least any one of the functional units to improve convenience of the information processing device 100.

The output unit 505 outputs, for example, a commuting block circuit determined by the first determination unit 503. The output unit 505 specifically transmits the commuting block circuit determined by the first determination unit 503 to another computer. The another computer is, for example, the calculation device 201 or the like. The output unit 505 may specifically output the commuting block circuit determined by the first determination unit 503, so that a user may refer to the commuting block circuit. As a result, the output unit 505 may enable external implementation of the commuting block circuit.

The output unit 505 outputs, for example, a base transformation circuit determined by the second determination unit 504. The output unit 505 specifically transmits the base transformation circuit by the second determination unit 504 to another computer. The another computer is, for example, the calculation device 201 or the like. The output unit 505 may specifically output the base transformation circuit determined by the second determination unit 504, so that a user may refer to the base transformation circuit. As a result, the output unit 505 may enable external implementation of the base transformation circuit.

(Operation Example of Information Processing Device 100)

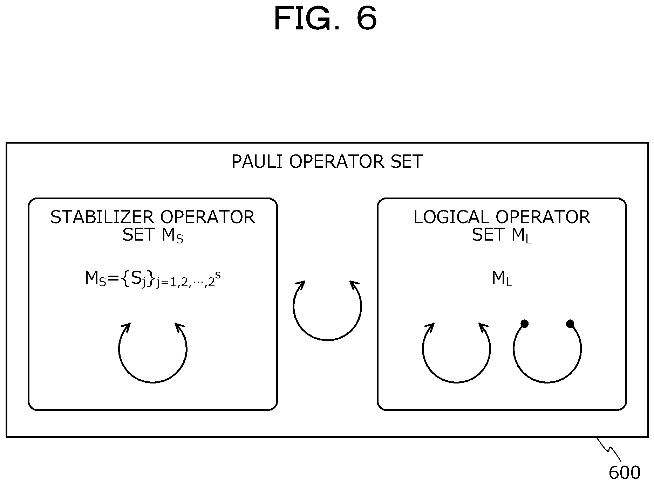

Next, an operation example of the information processing device 100 will be described with reference to FIGs. 6 to 13. First, specifically, an example of determining a commuting block circuit will be described with reference to FIG. 6.

FIG. 6 is an explanatory diagram illustrating an example of determining a commuting block circuit. As illustrated in FIG. 6, the information processing device 100 sets a stabilizer operator set M_S and a logical operator set M_L as subsets of a Pauli operator set 600.

The stabilizer operator set M_S includes $2^s$ stabilizer operators S_j (j = 1, 2, ..., $2^s$) each formed by a product of commutative and independent s Pauli operators. An index is represented by j. As indicated in the following Expression (1), in the stabilizer operator set M_S, the $2^s$ stabilizer operators S_j are mutually commutative. Furthermore, the number of stabilizer operators S_j may be, for example, less than $2^s$.

[Expression 1]

$$[S_i, S_j] = 0 \quad ...(1)$$

The logical operator set M_L includes a plurality of logical operators L_b. An index is represented by b. As indicated in the following Expression (2), the logical operators L_b are commutative with all the stabilizer operators S_j of the stabilizer operator set M_S. The number of logical operators L_b is, for example, 2(n - s). In the logical operator set M_L, the plurality of logical operators L_b is mutually commutative or anticommutative.

[Expression 2]

$$[S_j, L_b] = 0 \quad ...(2)$$

The information processing device 100 selects the b-th logical operator L_b in the logical operator set M_L for the b-th block of a commuting block circuit. The information processing device 100 determines a generator included in the j-th rotation gate of the b-th block as $G_j^b$ represented by the following Expression (3). The information processing device 100 determines the commuting block circuit such that the j-th rotation gate of the b-th block has the determined generator $G_j^b$.

[Expression 3]

$$G_j^b = S_j L_b \quad ...(3)$$

Here, a case has been described where the information processing device 100 selects the b-th logical operator L_b in the logical operator set M_L for the b-th block of the commuting block circuit. However, the present embodiment is not limited to this. For example, the information processing device 100 may selects the same x-th logical operator L_x in the logical operator set M_L for the b-th block and a b'-th block of the commuting block circuit.

Furthermore, any one stabilizer operator S_j of the stabilizer operator set M_S may not be included in a generator included in any rotation gate of a plurality of rotation gates included in the b-th block.

As a result, the information processing device 100 may appropriately determine the commuting block circuit so as to satisfy the first condition indicated by the following Expression (4) and the second condition indicated by the following Expressions (5) and (6). The first condition indicates that generators included in the respective rotation gates of the plurality of rotation gates included in each block forming the commuting block circuit are all commutative.

The second condition indicates that generators included in rotation gates included in different blocks forming the commuting block circuit are mutually commutative or anticommutative. Specifically, when the logical operator L_b and a logical operator L_C are commutative, the following Expression (5) holds. Furthermore, when the logical operator L_b and the logical operator L_C are anticommutative, the following Expression (6) holds.

[Expression 4]

$$[G_j^b, G_{j'}^b] = [L_b S_j, L_b S_{j'}] = 0 \quad ...(4)$$

[Expression 5]

$$[G_j^b, G_{j'}^C] = [L_b S_j, L_c S_{j'}] = 0 \quad ...(5)$$

[Expression 6]

$$\{G_j^b, G_{j'}^c\} = \{L_b S_j, L_c S_{j'}\} = 0 \quad ...(6)$$

As a result, the information processing device 100 may include up to $2^s$ rotation gates in one block. Thus, the information processing device 100 may determine each block forming the commuting block circuit such that differentials for up to $2^s$ parameters may be simultaneously measured by two types of quantum circuits each including a base transformation circuit.

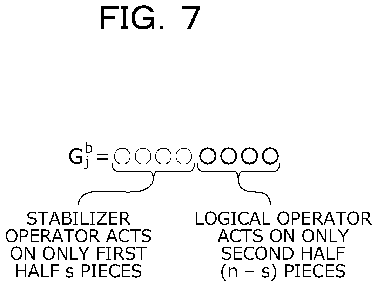

Next, a specific example in which the information processing device 100 determines a commuting block circuit will be described with reference to FIGs. 7 to 9. In the examples of FIGs. 7 to 9, it is assumed that the total number of qubits is n.

FIGs. 7 to 9 are explanatory diagrams illustrating the specific example of determining the commuting block circuit. In FIG. 7, the stabilizer operator S_j is a Pauli operator that causes the I operator or the Z operator to act on each first qubit of first half s first qubits among the n qubits. There are the $2^s$ stabilizer operators $S\_j$.

The logical operator $L\_b$ is, for example, a Pauli operator that causes the Z operator to act on the first to (j - 1)-th second qubits, and causes the X operator to act on the j-th second qubit, among second half (n - s) second qubits. The logical operator $L\_b$ is, for example, a Pauli operator that causes the Z operator to act on the first to (j - 1)-th second qubits, and causes the Y operator to act on the j-th second qubit, among the second half (n - s) second qubits. There are the 2(n - s) logical operators $L\_b$.

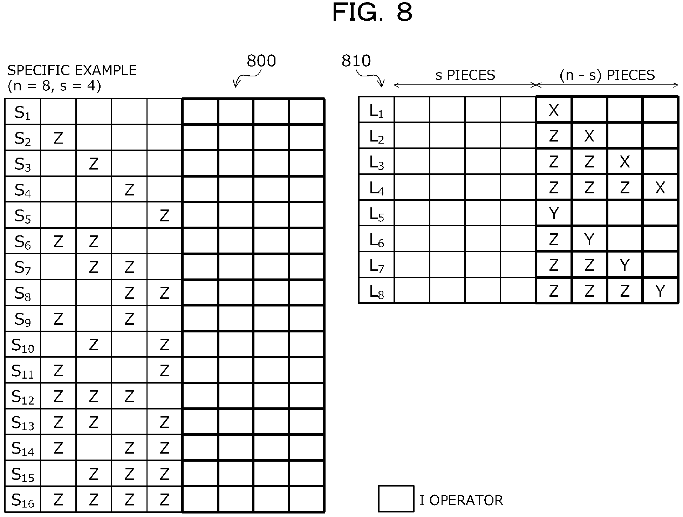

As illustrated in FIG. 7, when the Pauli operator $G\_j^b$ serving as the generator is a product of the stabilizer operator $S\_j$ acting on the first half s first qubits and the logical operator $L\_b$ acting on the second half (n - s) second qubits, it is conceivable that the first condition and the second condition are satisfied. Next, description of FIG. 8 will be made.

FIG. 8 illustrates an example of the stabilizer operator set $M\_S$ and the logical operator set $M\_L$. In the example of FIG. 8, it is assumed that n = 8 and s = 4 hold. In the following description, an action of a Pauli operator P may be referred to by a string of n characters. An i-th character in the string of n characters represents an action on an i-th qubit. The character is any one of I, X, Y, and Z.

A table 800 of FIG. 8 indicates the stabilizer operator set $M\_S$. The stabilizer operator set $M\_S$ includes, for example, stabilizer operators $S\_1$, $S\_2$, ..., $S\_{16}$. For example, the stabilizer operator $S\_1$ is the Pauli operator P = IIIIIIII. Furthermore, for example, the stabilizer operator $S\_2$ is the Pauli operator P = ZIIIIIII. Furthermore, for example, the stabilizer operator $S\_{16}$ is the Pauli operator P = ZZZZIIII.

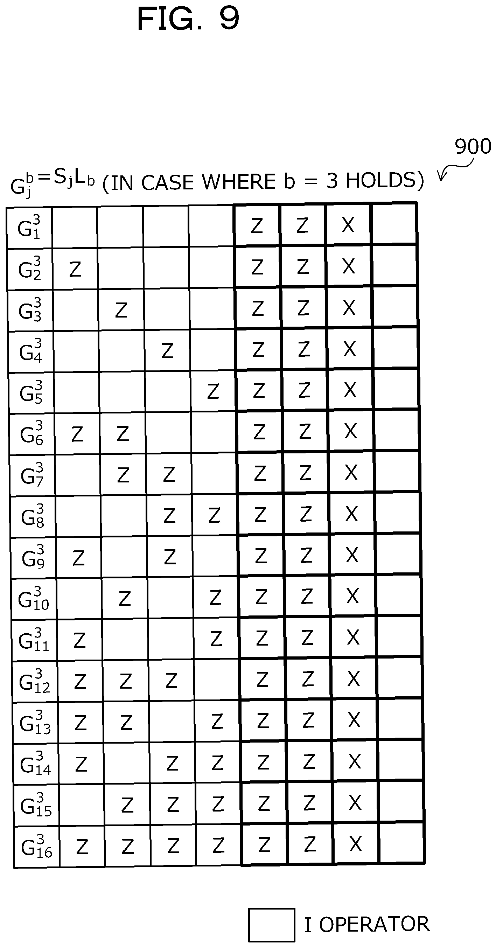

A table 810 of FIG. 8 indicates the logical operator set $M\_L$. The logical operator set $M\_L$ includes, for example, logical operators $L\_1$, $L\_2$, ..., $L\_8$. For example, the logical operator $L\_1$ is the Pauli operator P = IIIIXIII. Furthermore, for example, the logical operator $L\_2$ is the Pauli operator P = IIIIZXII. Furthermore, for example, the logical operator $L\_8$ is the Pauli operator P = IIIIZZZY. Next, description of FIG. 9 will be made.

A table 900 of FIG. 9 indicates a list of the Pauli operators $G\_j^b$ serving as the generators in a case where b = 3 holds. For example, there are Pauli operators $G\_1^3$, $G\_2^3$, ..., $G\_{16}^3$ as the generators. For example, the Pauli operator $G\_1^3$ = IIIIZZXI holds. Furthermore, for example, the Pauli operator $G\_2^3$ = ZIIIZZXI holds. Furthermore, for example, the Pauli operator $G\_{16}^3$ = ZZZZZZXI holds.

Similarly to the table 900 of FIG. 9, the information processing device 100 determines a commuting block circuit such that a generator included in the j-th rotation gate included in the b-th block is the Pauli operator $G\_j^b$. As a result, the information processing device 100 may appropriately determine the commuting block circuit so as to satisfy the first condition and the second condition.

Here, the information processing device 100 may systematically determine another commuting block circuit based on the determined commuting block circuit. For example, the following Expression (7) is defined using Clifford transformation $U\_C$. In the following description, a character a to which a character d is attached to an upper portion may be referred to as "$a^d$". Similarly to the Pauli operator $G\_j^b$, a Pauli operator $G\~\_j^b$ in the following Expression (7) may be used as the generator when the commuting block circuit is appropriately determined so as to satisfy the first condition and the second condition.

[Expression 7]

$$G_j^b \rightarrow \widetilde{G_j^b} = U_C G_j^b U_C^\dagger \quad ...(7)$$

Thus, the information processing device 100 may determine the new Pauli operator $G\~\_j^b$ based on the determined Pauli operator $G\_j^b$. The information processing device 100 may use the determined new Pauli operator $G\~\_j^b$ as the generator to appropriately determine the commuting block circuit so as to satisfy the first condition and the second condition.

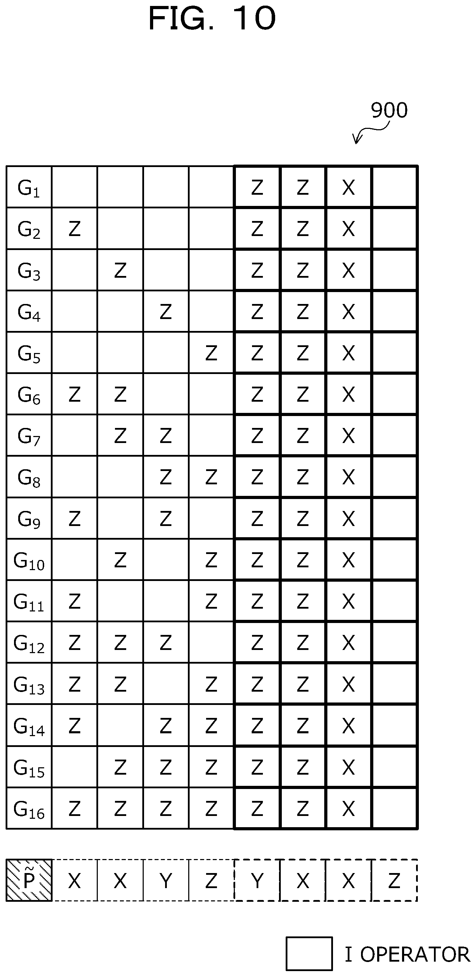

Next, a specific example in which the information processing device 100 determines a base transformation circuit will be described with reference to FIGs. 10 to 13.

FIGs. 10 to 13 are explanatory diagrams illustrating the specific example of determining the base transformation circuit. Here, in a case where Clifford inverse transformation $U\_C^\dagger$ is caused to act on any one of blocks forming a commuting block circuit, simultaneous measurement represented by the following Expression (8) is transformed into simultaneous measurement represented by the following Expression (9) regarding commutativity. Similarly, simultaneous measurement represented by the following Expression (10) is transformed into simultaneous measurement represented by the following Expression (11) regarding anticommutativity.

[Expression 8]

$$\widetilde{O}_j = 2\widetilde{G}_j P \quad ...(8)$$

[Expression 9]

$$O_j = U_C^\dagger \widetilde{O}_j U_C = 2G_j \tilde{P} \quad ...(9)$$

[Expression 10]

$$\widetilde{O}_j = 2i\widetilde{G}_j P \quad ...(10)$$

[Expression 11]

$$O_j = U_C^\dagger \widetilde{O}_j U_C = 2iG_j\tilde{P} \quad ...(11)$$

Thus, it is conceivable that a specific content of a base transformation circuit may be determined by using a special structure of a Pauli operator G_j serving as a generator. For example, it is conceivable that the base transformation circuit may be separated by first half partial circuits for the first half s first qubits and the second half (n - s) second qubits.

Specifically, since the logical operator L_b is fixed in one block for the second half (n - s) second qubits, a quantum gate may be determined for each second qubit according to the X operator, the Y operator, the Z operator, or the I operator acting on the second qubits. Specifically, when a special structure of S_j is used for the first half s first qubits, it is conceivable that a part of the first qubits do not need to undergo base transformation. Furthermore, specifically, it is conceivable that the base transformation may be performed on the remaining first qubits by a combination of a CZ gate, an H gate, and an S^† gate. The H gate is an Hadamard gate. The S^† gate is a phase shift gate.

In the following description, a case will be described where the information processing device 100 determines a base transformation circuit that performs a base transformation operation D for the b-th block. In the following description, for convenience, description of a subscript b may be omitted.

In a case where G~_j and P are commutative, a physical quantity to be simultaneously measured is O~_j indicated by the following Expression (12). In a case where G~_j and P are anticommutative, the physical quantity to be simultaneously measured is O~_j indicated by the following Expression (13). According to the Clifford inverse transformation U_C^†, the following Expression (14) holds in a case where G~_j and P are commutative. According to the Clifford inverse transformation U_C^†, the following Expression (15) holds in a case where G~_j and P are anticommutative. P~ is defined by the following Expression (16).

[Expression 12]

$$\widetilde{O}_j = 2\widetilde{G}_j P \quad ...(12)$$

[Expression 13]

$$\widetilde{O}_j = 2i\widetilde{G}_j P \quad ...(13)$$

[Expression 14]

$$\widetilde{O}_j \rightarrow O_j = U_C^\dagger \widetilde{O}_j U_C = 2G_j\tilde{P} \quad ...(14)$$

[Expression 15]

$$O_j = 2iG_j\tilde{P} \quad ...(15)$$

[Expression 16]

$$\tilde{P} = U_C^\dagger P U_C \quad ...(16)$$

According to the special structure of G_j, the following Expression (17) holds. C_j is a coefficient. A_j is a Pauli operator acting on the first half s first qubits. B is a Pauli operator acting on the second half (n - s) second qubits.

[Expression 17]

$$O_j = c_j A_j \otimes B \quad ...(17)$$

Since B is constant regardless of a type of a generator, a method of base transformation for the second qubits in measurement of the second half (n - s) second qubits is determined. Specifically, when the second qubit is an X base, it is determined that it is sufficient to perform the measurement of the second qubits by performing the base transformation by executing an H gate. When the second qubit is a Y base, it is determined that it is sufficient to perform the measurement of the second qubits by performing the base transformation by continuously executing an S^† gate and an H gate. When the second qubit is an I base or a Z base, it is determined that it is sufficient to perform the measurement of the second qubits on a calculation base without performing any operation.

According to the special structure of G_j, an action on any one first qubit of A_j is (I or Z) or (X or Y) regardless of j. In the following description, the first qubit on which (I or Z) acts may be referred to as "Q1". Furthermore, the first qubit on which (X or Y) acts may be referred to as "Q2".

It is sufficient that the first qubit Q1 is measured on the calculation base without performing any operation. Measurement of the first qubit Q2 is performed by a method different between a case where the number of times X acts in A_j is an odd number and a case where the number of times X acts in A_j is an even number. The odd number or the even number corresponds to commutativity or anticommutativity, respectively.

For example, a case will be described where the number of times X acts is an odd number. In this case, an H gate, an S^† gate, and an H gate are caused to continuously act on all the first qubits Q2. A CZ operation is performed on all pairs of the first qubits Q2. An H gate is caused to act on all the first qubits Q2. As a result, all the first qubits Q2 may be measured. It is sufficient that the information processing device 100 determines the base transformation circuit that implements the various actions described above.

Furthermore, for example, a case will be described where the number of times X acts is an even number. In this case, an H gate and an $S^\dagger$ gate are caused to continuously act on one first qubit Q2. An H gate, an $S^\dagger$ gate, and an H gate are caused to continuously act on all the remaining qubits Q2 different from the one first qubit. A CZ operation is performed on all pairs of the first qubits Q2. An H gate is caused to act on all the first qubits Q2. As a result, all the first qubits Q2 may be measured. It is sufficient that the information processing device 100 determines the base transformation circuit that implements the various actions described above. Here, description of FIGs. 10 to 13 will be made, and a specific example in which the information processing device 100 determines a base transformation circuit for the (b = 3)-th block will be described.

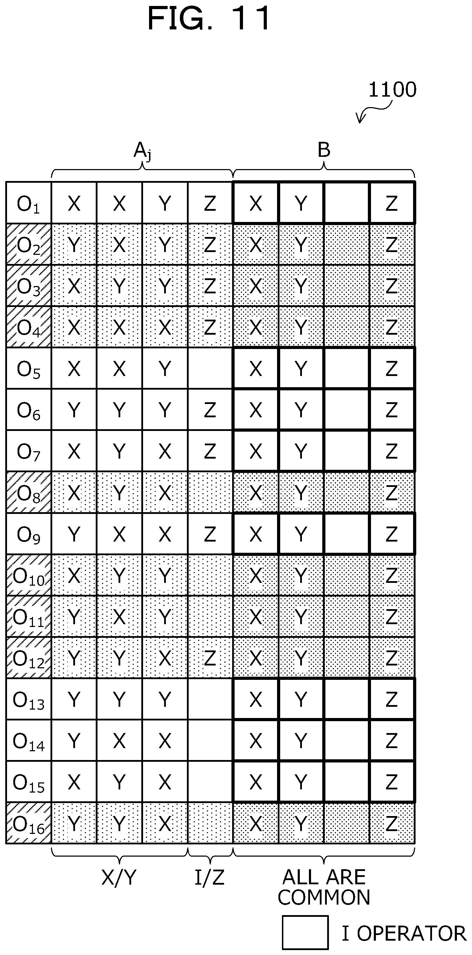

As illustrated in FIG. 10, it is assumed that, for j = 1, 2, ..., 16, the information processing device 100 has determined the third block in which the Pauli operator $G_j$ indicated in the table 900 is set as a generator included in the j-th rotation gate. As illustrated in FIG. 10, it is assumed that the information processing device 100 sets $\tilde{P}$ = XXYZYXXZ. Next, description of FIG. 11 will be made.

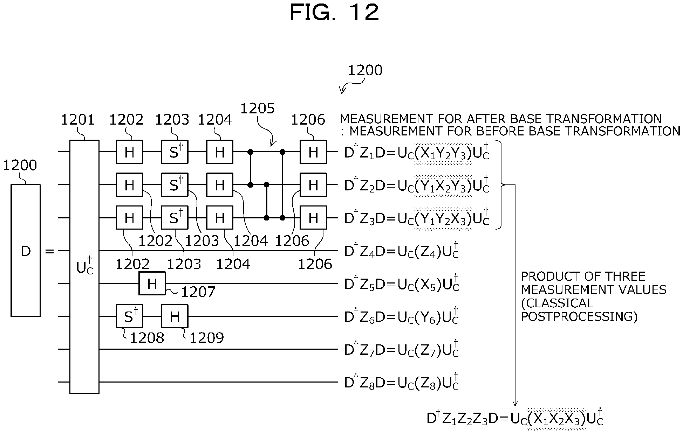

A table 1100 of FIG. 11 indicates $O_j$ (j = 1, 2, ..., 16) according to the Clifford inverse transformation $U\_C^\dagger$. In the table 1100, a plain row of $O_j$ indicates that the number of times X acts on the first qubit is an even number in $A_j$. A hatched row of $O_j$ indicates that the number of times X acts on the first qubit is an odd number in $A_j$. Next, description of FIG. 12 will be made. In the following description, the i-th qubit may be referred to by attaching "q i".

In FIG. 12, it is assumed that the information processing device 100 determines a base transformation circuit 1200 corresponding to $O_j$ in which the number of times X acts on the first qubit is an odd number in $A_j$. The base transformation circuit 1200 includes a quantum gate 1201 of the Clifford inverse transformation $U\_C^\dagger$.

The base transformation circuit 1200 includes an H gate 1202, an $S^\dagger$ gate 1203, and an H gate 1204 for each of the qubits q_1, q_2, and q_3. The base transformation circuit 1200 includes a CZ gate 1205 for all the qubits q_1, q_2, and q_3. The base transformation circuit 1200 includes an H gate 1206 for each of the qubits q_1, q_2, and q_3. The base transformation circuit 1200 includes an H gate 1207 for the qubit q_5. The base transformation circuit 1200 includes an $S^\dagger$ gate 1208 and an H gate 1209 for the qubit q_6.

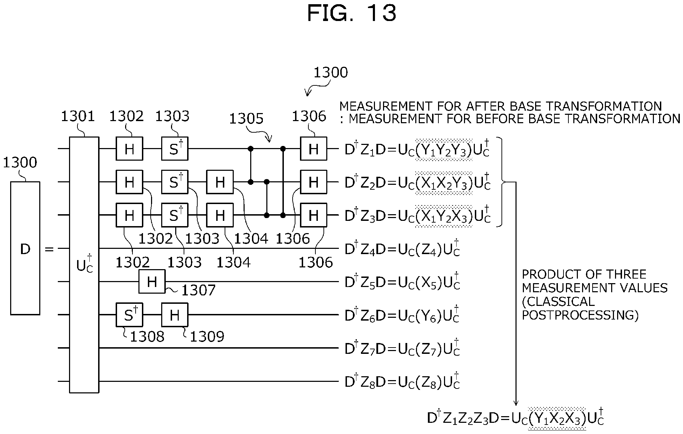

As illustrated in FIG. 12, Z measurement $Z_i$ for a qubit q_i after base transformation corresponds to various types of measurement for the qubit q_i before the base transformation. The various types of measurement are a combination of X measurement, Y measurement, and Z measurement. Therefore, a combination of $X\_1$ measurement, $X\_2$ measurement, and $X\_3$ measurement is simultaneously measured by a product of measurement values of $Z\_1$ measurement, $Z\_2$ measurement, and $Z\_3$ measurement. As a result, when the base transformation circuit 1200 is determined, the information processing device 100 may enable measurement of a differential related to a parameter for $O_j$ in which the number of times X acts on the first qubit is an odd number. Next, description of FIG. 13 will be made.

In FIG. 13, it is assumed that the information processing device 100 determines a base transformation circuit 1300 corresponding to $O_j$ in which the number of times X acts on the first qubit is an even number in $A_j$. The base transformation circuit 1300 includes a quantum gate 1301 of the Clifford inverse transformation $U\_C^\dagger$.

The base transformation circuit 1300 includes an H gate 1302 and an $S^\dagger$ gate 1303 for the qubit q_1. The base transformation circuit 1300 includes the H gate 1302, the $S^\dagger$ gate 1303, and an H gate 1304 for each of the qubits q_2 and q_3. The base transformation circuit 1300 includes a CZ gate 1305 for all the qubits q_1, q_2, and q_3. The base transformation circuit 1300 includes an H gate 1306 for each of the qubits q_1, q_2, and q_3. The base transformation circuit 1300 includes an H gate 1307 for the qubit q_5. The base transformation circuit 1300 includes an $S^\dagger$ gate 1308 and an H gate 1309 for the qubit q_6.

As illustrated in FIG. 13, the Z measurement $Z_i$ for the qubit q_i after the base transformation corresponds to various types of measurement for the qubit q_i before the base transformation. The various types of measurement are one or the combination of the X measurement, the Y measurement, and the Z measurement. Therefore, a combination of $Y\_1$ measurement, the $X\_2$ measurement, and the $X\_3$ measurement is simultaneously measured by the product of the measurement values of the $Z\_1$ measurement, the $Z\_2$ measurement, and the $Z\_3$ measurement. As a result, when the base transformation circuit 1300 is determined, the information processing device 100 may enable measurement of a differential related to a parameter for $O_j$ in which the number of times X acts on the first qubit is an even number.

(Example of Effect of Information Processing Device 100)

As described above, the information processing device 100 may determine a commuting block circuit that enables efficient gradient measurement. In the commuting block circuit, the information processing device 100 may enable simultaneous measurement of differentials related to up to $2^s$ parameters by two types of quantum circuits each including a base transformation circuit. The information processing device 100 may appropriately determine the base transformation circuit. Therefore, the information processing device 100 may reduce a processing cost at the time of optimization of the parameter in order to solve a target problem, and may facilitate solving of the target problem within a practical time. The processing cost is a processing load, a processing time, memory usage, or the like.

(Overall Processing Procedure)

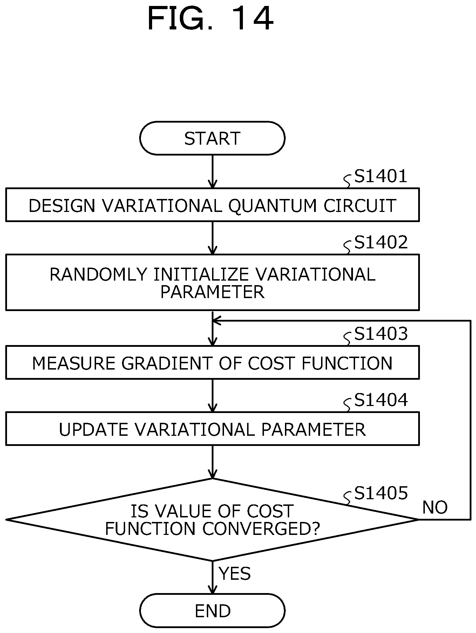

Next, an example of an overall processing procedure executed by the information processing device 100 will be described with reference to FIG. 14. Overall processing is implemented by, for example, the CPU 301, a storage area such as the memory 302 or the recording medium 305, and the network I/F 303 illustrated in FIG. 3.

FIG. 14 is a flowchart illustrating an example of the overall processing procedure. In FIG. 14, the information processing device 100 designs a variational quantum circuit (step S1401). The information processing device 100 randomly initializes a variational parameter (step S1402). The information processing device 100 measures a gradient of a cost function (step S1403).

The information processing device 100 updates the variational parameter (step S1404). The information processing device 100 determines whether or not a value of the cost function is converged (step S1405). Here, in a case where the value of the cost function is not converged (step S1405: No), the information processing device 100 returns to the processing of step S1403. On the other hand, in a case where the value of the cost function is converged (step S1405: Yes), the information processing device 100 ends the overall processing.

(Design Processing Procedure)

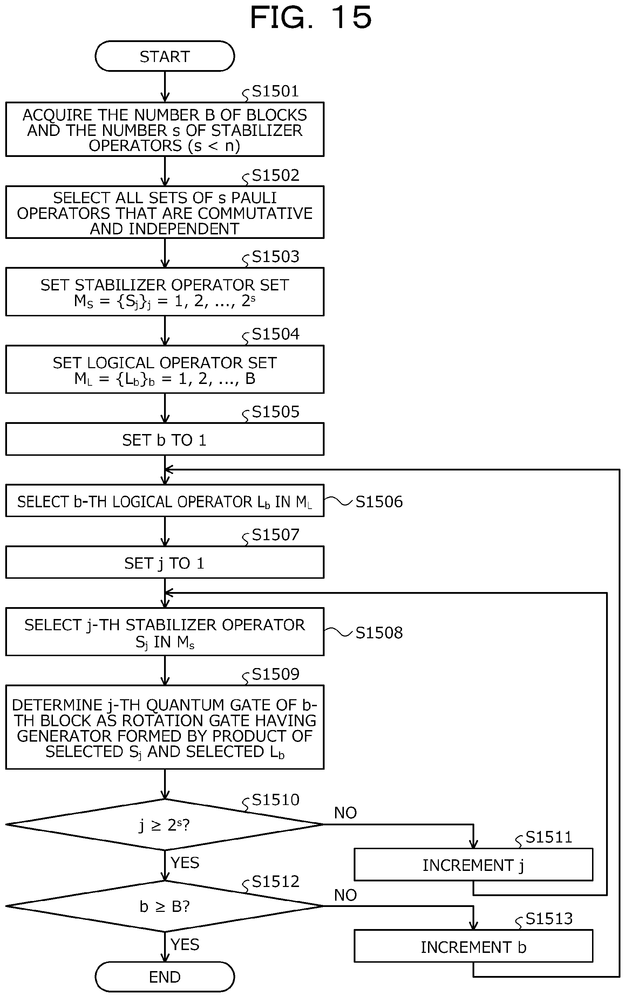

Next, an example of a design processing procedure executed by the information processing device 100 will be described with reference to FIG. 15. Design processing is implemented by, for example, the CPU 301, a storage area such as the memory 302 or the recording medium 305, and the network I/F 303 illustrated in FIG. 3.

FIG. 15 is a flowchart illustrating an example of the design processing procedure. In FIG. 15, the information processing device 100 acquires the number B of blocks and the number s of stabilizer operators (s < n) (step S1501). The information processing device 100 selects all sets of the s Pauli operators that are commutative and independent (step S1502).

The information processing device 100 sets $2^s$ stabilizer operators $S\_j$ formed by a product of the selected sets of the s Pauli operators different from each other, and sets the stabilizer operator set $M\_S = \{S\_j\}\_j = 1, 2, ..., 2^s$ (step S1503). The information processing device 100 sets the logical operators $L\_b$ commutative with all the stabilizer operators $S\_j$ in $M\_S$, and sets the logical operator set $M\_L = \{L\_b\}\_b = 1, 2, ..., B$ (step S1504).

The information processing device 100 sets b to 1 (step S1505). The information processing device 100 selects the b-th logical operator $L\_b$ in $M\_L$ (step S1506). The information processing device 100 sets j to 1 (step S1507).

The information processing device 100 selects the j-th stabilizer operator $S\_j$ in $M\_s$ (step S1508). The information processing device 100 determines the j-th quantum gate of the b-th block as a rotation gate having a generator formed by a product of the selected $S\_j$ and the selected $L\_b$ (step S1509).

The information processing device 100 determines whether or not $j \geq 2^s$ holds (step S1510). Here, in a case where $j \geq 2^s$ does not hold (step S1510: No), the information processing device 100 increments j (step S1511), and returns to the processing of step S1508. On the other hand, in a case where $j \geq 2^s$ holds (step S1510: Yes), the information processing device 100 proceeds to processing of step S1512.

In step S1512, the information processing device 100 determines whether or not $b \geq B$ holds (step S1512). Here, in a case where $b \geq B$ does not hold (step S1512: No), the information processing device 100 increments b (step S1513), and returns to the processing of step S1506. On the other hand, in a case where $b \geq B$ holds (step S1512: Yes), the information processing device 100 ends the design processing. As a result, the information processing device 100 may appropriately determine a commuting block circuit so as to satisfy the first condition described above and the second condition described above.

As described above, according to the information processing device 100, it is possible to acquire a first Pauli operator set that is a set of first Pauli operators for qubits related to a problem formed by a product of Pauli operators for qubits different from each other. According to the information processing device 100, it is possible to acquire a second Pauli operator set that is a set of second Pauli operators for the qubits related to the problem, which are mutually commutative or anticommutative and are commutative with all the first Pauli operators of the first Pauli operator set. According to the information processing device 100, it is possible to form a generator by a product of any one of the first Pauli operators different for each rotation gate in the first Pauli operator set and any one of the second Pauli operators selected for each block in the second Pauli operator set. According to the information processing device 100, it is possible to determine a commuting block circuit such that each rotation gate of a plurality of rotation gates included in each block of a plurality of blocks corresponding to the specified number has the formed generator. As a result, the information processing device 100 may appropriately determine the commuting block circuit so as to satisfy the first condition described above and the second condition described above. The information processing device 100 may enable implementation of the commuting block circuit.

According to the information processing device 100, it is possible to prepare a plurality of Pauli operators that is mutually commutative and independent for each first qubit of one or more first qubits corresponding to the predetermined number. According to the information processing device 100, it is possible to acquire the first Pauli operator set that is a set of the first Pauli operators for the qubits related to the problem formed by a product of Pauli operators for the first qubits different from each other among the plurality of Pauli operators. According to the information processing device 100, it is possible to acquire the second Pauli operator set that is a set of the second Pauli operators for remaining second qubits different from the one or more first qubits corresponding to the predetermined number, which are mutually commutative or anticommutative. As a result, the information processing device 100 may appropriately prepare the first Pauli operator set and the second Pauli operator set serving as the reference for determining the generator of the rotation gate, and may prepare the commuting block circuit in a determinable manner.

According to the information processing device 100, it is possible to prepare the plurality of Pauli operators that causes an I operator or a Z operator to act on each first qubit of s first qubits among n qubits related to the problem. According to the information processing device 100, it is possible to acquire the first Pauli operator set that is a set of the first Pauli operators for the s first qubits formed by a product of s Pauli operators for the first qubits different from each other among a plurality of Pauli operators. According to the information processing device 100, it is possible to specify (n - s) second qubits. According to the information processing device 100, it is possible to determine, for each second qubit, the second Pauli operator that causes an X operator or a Y operator to act on the second qubit, and causes the Z operator to act on another second qubit of which order is earlier than that of the second qubit. According to the information processing device 100, it is possible to acquire the second Pauli operator set that is the set of the second Pauli operators. As a result, the information processing device 100 may appropriately prepare the first Pauli operator set and the second Pauli operator set serving as a reference for determining the generator of the rotation gate, and may prepare the commuting block circuit in a determinable manner.

According to the information processing device 100, it is possible to determine, for each rotation gate included in each block, a generator formed by a product of the second Pauli operator in the same order as that of the block and the first Pauli operator in the same order as that of the rotation gate. As a result, the information processing device 100 may appropriately determine the generator of the rotation gate.

According to the information processing device 100, it is possible to determine the commuting block circuit such that a j-th rotation gate included in a b-th block among the plurality of blocks includes a generator formed by a product of a b-th second Pauli operator and a j-th first Pauli operator. As a result, the information processing device 100 may appropriately determine the generator of the rotation gate, and appropriately determine the commuting block circuit so as to satisfy the first condition described above and the second condition described above.

According to the information processing device 100, it is possible to determine whether or not the number of X operators acting on the one or more first qubits is an odd number in a case where Clifford inverse transformation is performed on all the qubits related to the problem for any one block of the plurality of blocks. According to the information processing device 100, it is possible to determine a base transformation circuit in a case where it is determined that the number of X operators is an odd number. As a result, the information processing device 100 may determine the appropriate base transformation circuit for the determined commuting block circuit, and may enable measurement of a differential for a parameter.

According to the information processing device 100, it is possible to determine whether or not the number of X operators acting on the one or more first qubits is an even number in a case where the Clifford inverse transformation is performed on all the qubits related to the problem for any one block of the plurality of blocks. According to the information processing device 100, it is possible to determine the base transformation circuit in a case where it is determined that the number of X operators is an even number. As a result, the information processing device 100 may determine the appropriate base transformation circuit for the determined commuting block circuit, and may enable measurement of a differential for a parameter.

Note that the information processing method described in the present embodiment may be implemented by executing a program prepared in advance in a computer such as a PC or a workstation. The information processing program described in the present embodiment is recorded in a computer-readable recording medium, and is read from the recording medium by a computer to execute the program. The recording medium is a hard disk, a flexible disk, a compact disc (CD)-ROM, a magneto optical disc (MO), a digital versatile disc (DVD), or the like. Furthermore, the information processing program described in the present embodiment may be distributed via a network such as the Internet.

**Claims**

1. An information processing program for causing a computer to execute processing comprising:

    acquiring a first Pauli operator set that is a set of first Pauli operators for qubits related to a target problem formed by a product of Pauli operators for qubits different from each other among a plurality of Pauli operators that is mutually commutative and independent for the qubits related to the problem;

acquiring a second Pauli operator set that is a set of second Pauli operators for the qubits related to the problem, which are mutually commutative or anticommutative and are commutative with all the first Pauli operators of the first Pauli operator set; and

determining a commuting block circuit formed by a plurality of blocks that corresponds to a specified number such that each rotation gate of a plurality of rotation gates included in each block of the plurality of blocks has a generator ($G\_j^b$) formed by a product of any one first Pauli operator different for each of the rotation gates in the acquired first Pauli operator set and any one second Pauli operator selected for each of the blocks in the acquired second Pauli operator set.

2. The information processing program according to claim 1, wherein,

in the processing of acquiring the first Pauli operator set,
the first Pauli operator set that is a set of the first Pauli operators for the qubits related to the problem formed by a product of Pauli operators for the first qubits different from each other among the plurality of Pauli operators that is mutually commutative and independent for each first qubit of one or more first qubits that correspond to a predetermined number among the qubits related to the problem is acquired, and
in the processing of acquiring the second Pauli operator set,
the second Pauli operator set that is a set of the second Pauli operators for remaining second qubits different from the one or more first qubits that correspond to the predetermined number among the qubits related to the problem, which are mutually commutative or anticommutative and are commutative with all the first Pauli operators in the first Pauli operator set, is acquired.

3. The information processing program according to claim 2, wherein,

in the processing of acquiring the first Pauli operator set,
the first Pauli operator set that is a set of the first Pauli operators for s first qubits formed by a product of s Pauli operators for first qubits different from each other among a plurality of Pauli operators that causes an I operator or a Z operator to act on each first qubit of the s first qubits among n qubits related to the problem is acquired, and
in the processing of acquiring the second Pauli operator set,
the second Pauli operator set that is a set of the second Pauli operators that are commutative with all the first Pauli operators in the first Pauli operator set, cause, for each second qubit of (n - s) second qubits different from the s first qubits among the n qubits related to the problem, an X operator or a Y operator to act on the second qubit, and cause the Z operator to act on another second qubit of which order is earlier than order of the second qubit is acquired.

4. The information processing program according to claim 2, wherein,

in the processing of determining,
the commuting block circuit is determined such that each of the rotation gates included in each of the blocks has a generator formed by a product of the second Pauli operator in the same order as order of the block in the second Pauli operator set and the first Pauli operator in the same order as order of the rotation gate in the first Pauli operator set.

5. The information processing program according to claim 4, wherein,

in the processing of determining,
the commuting block circuit is determined such that a j-th rotation gate included in a b-th block among the plurality of blocks has a generator formed by a product of a b-th second Pauli operator in the second Pauli operator set and a j-th first Pauli operator in the first Pauli operator set.

6. The non-transitory computer-readable recording medium according to claim 4, wherein,

for any one block of the plurality of blocks, whether or not the number of X operators that act on the one or more first qubits is an odd number in a case where Clifford inverse transformation is performed on all the qubits related to the problem is determined, a third qubit on which an X operator or a Y operator acts and a fourth qubit on which an I operator or a Z operator acts are specified among the one or more first qubits, and a fifth qubit on which an X operator acts and a sixth qubit on which a Y operator acts are specified among the remaining second qubits, and
in a case where it is determined the number is an odd number, a base transformation circuit is determined in such a way as to include a Clifford inverse transformation gate for all the qubits related to the problem, include a set of an Hadamard gate, a phase shift gate, and an Hadamard gate for each of the third qubits after the Clifford inverse transformation gate, include a CZ gate for all the third qubits after the set, include an Hadamard gate for each of the third qubits after the CZ gate, and include an Hadamard gate for the fifth qubit and a set of a phase shift gate and an Hadamard gate for the sixth qubit after the Clifford inverse transformation gate.

7. The information processing program according to claim 4, wherein,
for any one block of the plurality of blocks, whether or not the number of X operators that act on the one or more first qubits is an odd number in a case where Clifford inverse transformation is performed on all the qubits related to the problem is determined, a third qubit on which an X operator or a Y operator acts and a fourth qubit on which an I operator or a Z operator acts are specified among the one or more first qubits, and a fifth qubit on which an X operator acts and a sixth qubit on which a Y operator acts are specified among the remaining second qubits, and in a case where it is determined the number is an even number, a base transformation circuit is determined in such a way as to include a Clifford inverse transformation gate for all the qubits related to the problem, include a first set of an Hadamard gate and a phase shift gate for any one of the third qubits and a second set of an Hadamard gate, a phase shift gate, and an Hadamard gate for each of remaining third qubits different from the any one of the third qubits after the Clifford inverse transformation gate, include a CZ gate for all the third qubits after the first set and the second set, include an Hadamard gate for each of the third qubits after the CZ gate, and include an Hadamard gate for the fifth qubit and a set of a phase shift gate and an Hadamard gate for the sixth qubit after the Clifford inverse transformation gate.

8. An information processing method implemented by a computer, the information processing method comprising:

acquiring a first Pauli operator set that is a set of first Pauli operators for qubits related to a target problem formed by a product of Pauli operators for qubits different from each other among a plurality of Pauli operators that is mutually commutative and independent for the qubits related to the problem;
acquiring a second Pauli operator set that is a set of second Pauli operators for the qubits related to the problem, which are mutually commutative or anticommutative and are commutative with all the first Pauli operators of the first Pauli operator set; and
determining a commuting block circuit formed by a plurality of blocks that corresponds to a specified number such that each rotation gate of a plurality of rotation gates included in each block of the plurality of blocks has a generator $(G\_j^b)$ formed by a product of any one first Pauli operator different for each of the rotation gates in the acquired first Pauli operator set and any one second Pauli operator selected for each of the blocks in the acquired second Pauli operator set.

9. An information processing device comprising:

a control unit configured to
acquire a first Pauli operator set that is a set of first Pauli operators for qubits related to a target problem formed by a product of Pauli operators for qubits different from each other among a plurality of Pauli operators that is mutually commutative and independent for the qubits related to the problem;
acquire a second Pauli operator set that is a set of second Pauli operators for the qubits related to the problem, which are mutually commutative or anticommutative and are commutative with all the first Pauli operators of the first Pauli operator set; and
determin a commuting block circuit formed by a plurality of blocks that corresponds to a specified number such that each rotation gate of a plurality of rotation gates included in each block of the plurality of blocks has a generator $(G\_j^b)$ formed by a product of any one first Pauli operator different for each of the rotation gates in the acquired first Pauli operator set and any one second Pauli operator selected for each of the blocks in the acquired second Pauli operator set.

FIG. 1

100

120

110

PRODUCT

PRODUCT

| | $q_1$ | $q_2$ | $\cdots$ | $q_s$ | $q_{s+1}$ | $q_{s+2}$ | $\cdots$ | $q_n$ |
|---|---|---|---|---|---|---|---|---|
| $S_1$ | | | $\cdots$ | | | | $\cdots$ | |
| $S_2$ | Z | | $\cdots$ | | | | $\cdots$ | |
| $\cdots$ | $\cdots$ | $\cdots$ | $\cdots$ | $\cdots$ | $\cdots$ | $\cdots$ | $\cdots$ | $\cdots$ |
| $S_z$ | Z | Z | $\cdots$ | Z | | | $\cdots$ | |

s PIECES          (n - s) PIECES

| | $q_1$ | $q_2$ | $\cdots$ | $q_s$ | $q_{s+1}$ | $q_{s+2}$ | $\cdots$ | $q_n$ |
|---|---|---|---|---|---|---|---|---|
| $L_1$ | | | $\cdots$ | | X | | $\cdots$ | |
| $L_2$ | | | $\cdots$ | | Z | X | $\cdots$ | |
| $\cdots$ | $\cdots$ | $\cdots$ | $\cdots$ | $\cdots$ | $\cdots$ | $\cdots$ | $\cdots$ | $\cdots$ |
| $L_x$ | | | $\cdots$ | | Z | Z | $\cdots$ | X |
| $L_{x+1}$ | | | $\cdots$ | | Y | | $\cdots$ | |
| $L_{x+2}$ | | | $\cdots$ | | Z | Y | $\cdots$ | |
| $\cdots$ | $\cdots$ | $\cdots$ | $\cdots$ | $\cdots$ | $\cdots$ | $\cdots$ | $\cdots$ | $\cdots$ |
| $L_y$ | | | $\cdots$ | | Z | Z | $\cdots$ | Y |

s PIECES          (n - s) PIECES

I OPERATOR

| | $q_1$ | $q_2$ | $\cdots$ | $q_s$ | $q_{s+1}$ | $q_{s+2}$ | $\cdots$ | $q_n$ |
|---|---|---|---|---|---|---|---|---|
| $G_1$ | | | $\cdots$ | | Y | | $\cdots$ | |
| $G_2$ | Z | | $\cdots$ | | Y | | $\cdots$ | |
| $\cdots$ | $\cdots$ | $\cdots$ | $\cdots$ | $\cdots$ | $\cdots$ | $\cdots$ | $\cdots$ | $\cdots$ |
| $G_z$ | Z | Z | $\cdots$ | Z | Y | | $\cdots$ | |

101

COMMUTING BLOCK CIRCUIT

$G_1^1$  $G_2^1$  $\cdots$  $\cdots$  $G_1^B$  $G_2^B$  $\cdots$

ROTATION GATE

$G_j^b = e^{i\theta_j^b G_j^b}$

# FIG. 2

# FIG. 3

# FIG. 4

CPU 401

MEMORY 402

201

400

NETWORK I/F 403

NETWORK 210

RECORDING MEDIUM I/F 404

RECORDING MEDIUM 405

ARITHMETIC HOUSING I/F 406

ARITHMETIC HOUSING 407

MICROWAVE PULSE GENERATOR

ROOM TEMPERATURE SIDE    INPUT    OUTPUT    ROOM TEMPERATURE SIDE

INPUT

MICROWAVE PULSE DEMODULATOR

LOW NOISE AMPLIFIER

OUTPUT

(10mK)

QUANTUM STATE TRANSFER TECHNOLOGY

QUBIT CHIP    QUBIT CHIP

CRYOGENIC DILUTION REFRIGERATOR (HOUSING)

FIG. 5

# FIG. 6

PAULI OPERATOR SET

STABILIZER OPERATOR SET $M_S$

$$M_S=\{S_j\}_{j=1,2,\cdots,2^s}$$

LOGICAL OPERATOR SET $M_L$

$M_L$

600

# FIG. 7

$$G_j^b = \underbrace{\bigcirc\bigcirc\bigcirc\bigcirc}\underbrace{\bigcirc\bigcirc\bigcirc\bigcirc}$$

STABILIZER
OPERATOR ACTS
ON ONLY FIRST
HALF s PIECES

LOGICAL OPERATOR
ACTS ON ONLY
SECOND HALF
(n − s) PIECES

# FIG. 8

SPECIFIC EXAMPLE
(n = 8, s = 4)                    800

| | 1 | 2 | 3 | 4 | 5 | 6 | 7 | 8 |
|---|---|---|---|---|---|---|---|---|
| $S_1$ | | | | | | | | |
| $S_2$ | Z | | | | | | | |
| $S_3$ | | Z | | | | | | |
| $S_4$ | | | Z | | | | | |
| $S_5$ | | | | Z | | | | |
| $S_6$ | Z | Z | | | | | | |
| $S_7$ | | Z | Z | | | | | |
| $S_8$ | | | Z | Z | | | | |
| $S_9$ | Z | | Z | | | | | |
| $S_{10}$ | | Z | | Z | | | | |
| $S_{11}$ | Z | | | Z | | | | |
| $S_{12}$ | Z | Z | Z | | | | | |
| $S_{13}$ | Z | Z | | Z | | | | |
| $S_{14}$ | Z | | Z | Z | | | | |
| $S_{15}$ | | Z | Z | Z | | | | |
| $S_{16}$ | Z | Z | Z | Z | | | | |

810

| | s PIECES | | | | (n - s) PIECES | | | |
|---|---|---|---|---|---|---|---|---|
| $L_1$ | | | | | X | | | |
| $L_2$ | | | | | Z | X | | |
| $L_3$ | | | | | Z | Z | X | |
| $L_4$ | | | | | Z | Z | Z | X |
| $L_5$ | | | | | Y | | | |
| $L_6$ | | | | | Z | Y | | |
| $L_7$ | | | | | Z | Z | Y | |
| $L_8$ | | | | | Z | Z | Z | Y |

☐ I OPERATOR

# FIG. 9

$G_j^b = S_j L_b$ (IN CASE WHERE b = 3 HOLDS) 900

| | | | | | | | | |
|---|---|---|---|---|---|---|---|---|
| $G_1^3$ | | | | | Z | Z | X | |
| $G_2^3$ | Z | | | | Z | Z | X | |
| $G_3^3$ | | Z | | | Z | Z | X | |
| $G_4^3$ | | | Z | | Z | Z | X | |
| $G_5^3$ | | | | Z | Z | Z | X | |
| $G_6^3$ | Z | Z | | | Z | Z | X | |
| $G_7^3$ | | Z | Z | | Z | Z | X | |
| $G_8^3$ | | | Z | Z | Z | Z | X | |
| $G_9^3$ | Z | | Z | | Z | Z | X | |
| $G_{10}^3$ | | Z | | Z | Z | Z | X | |
| $G_{11}^3$ | Z | | | Z | Z | Z | X | |
| $G_{12}^3$ | Z | Z | Z | | Z | Z | X | |
| $G_{13}^3$ | Z | Z | | Z | Z | Z | X | |
| $G_{14}^3$ | Z | | Z | Z | Z | Z | X | |
| $G_{15}^3$ | | Z | Z | Z | Z | Z | X | |
| $G_{16}^3$ | Z | Z | Z | Z | Z | Z | X | |

☐ I OPERATOR

# FIG. 10

900

| | | | | | Z | Z | X | |
|---|---|---|---|---|---|---|---|---|
| $G_1$ | | | | | Z | Z | X | |
| $G_2$ | Z | | | | Z | Z | X | |
| $G_3$ | | Z | | | Z | Z | X | |
| $G_4$ | | | Z | | Z | Z | X | |
| $G_5$ | | | | Z | Z | Z | X | |
| $G_6$ | Z | Z | | | Z | Z | X | |
| $G_7$ | | Z | Z | | Z | Z | X | |
| $G_8$ | | | Z | Z | Z | Z | X | |
| $G_9$ | Z | | Z | | Z | Z | X | |
| $G_{10}$ | | Z | | Z | Z | Z | X | |
| $G_{11}$ | Z | | | Z | Z | Z | X | |
| $G_{12}$ | Z | Z | Z | | Z | Z | X | |
| $G_{13}$ | Z | Z | | Z | Z | Z | X | |
| $G_{14}$ | Z | | Z | Z | Z | Z | X | |
| $G_{15}$ | | Z | Z | Z | Z | Z | X | |
| $G_{16}$ | Z | Z | Z | Z | Z | Z | X | |

| $\tilde{P}$ | X | X | Y | Z | Y | X | X | Z |
|---|---|---|---|---|---|---|---|---|

☐ I OPERATOR

# FIG. 11

1100

| | $A_j$ | | | | B | | | |
|---|---|---|---|---|---|---|---|---|
| $O_1$ | X | X | Y | Z | X | Y | | Z |
| $O_2$ | Y | X | Y | Z | X | Y | | Z |
| $O_3$ | X | Y | Y | Z | X | Y | | Z |
| $O_4$ | X | X | X | Z | X | Y | | Z |
| $O_5$ | X | X | Y | | X | Y | | Z |
| $O_6$ | Y | Y | Y | Z | X | Y | | Z |
| $O_7$ | X | Y | X | Z | X | Y | | Z |
| $O_8$ | X | Y | X | | X | Y | | Z |
| $O_9$ | Y | X | X | Z | X | Y | | Z |
| $O_{10}$ | X | Y | Y | | X | Y | | Z |
| $O_{11}$ | Y | X | Y | | X | Y | | Z |
| $O_{12}$ | Y | Y | X | Z | X | Y | | Z |
| $O_{13}$ | Y | Y | Y | | X | Y | | Z |
| $O_{14}$ | Y | X | X | | X | Y | | Z |
| $O_{15}$ | X | Y | X | | X | Y | | Z |
| $O_{16}$ | Y | Y | X | | X | Y | | Z |

X/Y        I/Z        ALL ARE COMMON

☐  I OPERATOR

# FIG. 12

MEASUREMENT FOR AFTER BASE TRANSFORMATION
: MEASUREMENT FOR BEFORE BASE TRANSFORMATION

$D^\dagger Z_1 D = U_C(X_1 Y_2 Y_3) U_C^\dagger$

$D^\dagger Z_2 D = U_C(Y_1 X_2 Y_3) U_C^\dagger$

$D^\dagger Z_3 D = U_C(Y_1 Y_2 X_3) U_C^\dagger$

$D^\dagger Z_4 D = U_C(Z_4) U_C^\dagger$

$D^\dagger Z_5 D = U_C(X_5) U_C^\dagger$

$D^\dagger Z_6 D = U_C(Y_6) U_C^\dagger$

$D^\dagger Z_7 D = U_C(Z_7) U_C^\dagger$

$D^\dagger Z_8 D = U_C(Z_8) U_C^\dagger$

PRODUCT OF THREE
MEASUREMENT VALUES
(CLASSICAL
POSTPROCESSING)

$D^\dagger Z_1 Z_2 Z_3 D = U_C(X_1 X_2 X_3) U_C^\dagger$

FIG. 13

1300

MEASUREMENT FOR AFTER BASE TRANSFORMATION

: MEASUREMENT FOR BEFORE BASE TRANSFORMATION

1301 1302 1303 1305 1306

1300

$D =$

$D^\dagger Z_1 D = U_C(Y_1 Y_2 Y_3) U_C^\dagger$

$D^\dagger Z_2 D = U_C(X_1 X_2 Y_3) U_C^\dagger$

$D^\dagger Z_3 D = U_C(X_1 Y_2 X_3) U_C^\dagger$

1302 1303 1304 1306

1302 1303 1304 1306

$D^\dagger Z_4 D = U_C(Z_4) U_C^\dagger$

1307

$D^\dagger Z_5 D = U_C(X_5) U_C^\dagger$

1308 1309

$D^\dagger Z_6 D = U_C(Y_6) U_C^\dagger$

$D^\dagger Z_7 D = U_C(Z_7) U_C^\dagger$

$D^\dagger Z_8 D = U_C(Z_8) U_C^\dagger$

PRODUCT OF THREE
MEASUREMENT VALUES
(CLASSICAL
POSTPROCESSING)

$D^\dagger Z_1 Z_2 Z_3 D = U_C(Y_1 X_2 X_3) U_C^\dagger$

# FIG. 14

```
                    ┌──────────────┐
                    │    START     │
                    └──────────────┘
                           │
                           ▼              ⌐S1401
          ┌─────────────────────────────────────────┐
          │   DESIGN VARIATIONAL QUANTUM CIRCUIT     │
          └─────────────────────────────────────────┘
                           │
                           ▼              ⌐S1402
          ┌─────────────────────────────────────────┐
          │      RANDOMLY INITIALIZE VARIATIONAL     │
          │               PARAMETER                  │
          └─────────────────────────────────────────┘
                           │
                           ▼              ⌐S1403
          ┌─────────────────────────────────────────┐
          │     MEASURE GRADIENT OF COST FUNCTION    │
          └─────────────────────────────────────────┘
                           │
                           ▼              ⌐S1404
          ┌─────────────────────────────────────────┐
          │       UPDATE VARIATIONAL PARAMETER       │
          └─────────────────────────────────────────┘
                           │
                           ▼                      ⌐S1405
                    ◇ IS VALUE OF COST ◇              NO
                    ◇ FUNCTION CONVERGED? ◇──────────────►
                           │
                          YES
                           ▼
                    ┌──────────────┐
                    │     END      │
                    └──────────────┘
```

# FIG. 15

START

$\varsigma$S1501

ACQUIRE THE NUMBER B OF BLOCKS AND THE NUMBER s OF STABILIZER OPERATORS (s < n)

$\varsigma$S1502

SELECT ALL SETS OF s PAULI OPERATORS THAT ARE COMMUTATIVE AND INDEPENDENT

$\varsigma$S1503

SET STABILIZER OPERATOR SET $M_S = \{S_j\}_j = 1, 2, ..., 2^s$

$\varsigma$S1504

SET LOGICAL OPERATOR SET $M_L = \{L_b\}_b = 1, 2, ..., B$

$\varsigma$S1505

SET b TO 1

SELECT b-TH LOGICAL OPERATOR $L_b$ IN $M_L$ — S1506

$\varsigma$S1507

SET j TO 1

SELECT j-TH STABILIZER OPERATOR $S_j$ IN $M_s$ — S1508

$\varsigma$S1509

DETERMINE j-TH QUANTUM GATE OF b-TH BLOCK AS ROTATION GATE HAVING GENERATOR FORMED BY PRODUCT OF SELECTED $S_j$ AND SELECTED $L_b$

$\varsigma$S1510

$j \geq 2^s$?

NO → $\varsigma$S1511 INCREMENT j

YES

$\varsigma$S1512

$b \geq B$?

NO → $\varsigma$S1513 INCREMENT b

YES

END

Europäisches
Patentamt

European
Patent Office

Office européen
des brevets

# EUROPEAN SEARCH REPORT

**Application Number**

EP 25 15 4938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOSEPH BOWLES ET AL: "Backpropagation scaling in parameterised quantum circuits", ARXIV.ORG, CORNELL UNIVERSITY LIBRARY, 201 OLIN LIBRARY CORNELL UNIVERSITY ITHACA, NY 14853, 26 June 2023 (2023-06-26), XP091548464, * page 7; figure 3 *<br>----- | 1-9 | INV.<br>G06N10/20<br>G06N10/60 |

**TECHNICAL FIELDS SEARCHED (IPC)**

G06N

The present search report has been drawn up for all claims

| Place of search | Date of completion of the search | Examiner |
|---|---|---|
| The Hague | 19 June 2025 | Falco, Gabriele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
  .......................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023175703 A
- WO 2023148806 A
- US 20230237361
- US 20200364602

**Non-patent literature cited in the description**

- **BOWLES, JOSEPH** ; **DAVID WIERICHS** ; **CHAE-YEUN PARK**. Backpropagation scaling in parameterized quantum circuits. *arXiv preprint arXiv:2306.14962*, 2023